(19) Europäisches Patentamt / European Patent Office / Office européen des brevets

(11) EP 4 207 415 A1

(12) **EUROPEAN PATENT APPLICATION**
published in accordance with Art. 153(4) EPC

(43) Date of publication:
05.07.2023 Bulletin 2023/27

(51) International Patent Classification (IPC):
*H01M 10/0525* (2010.01)

(21) Application number: 21943320.8

(22) Date of filing: 02.11.2021

(86) International application number:
PCT/CN2021/128178

(87) International publication number:
WO 2023/077266 (11.05.2023 Gazette 2023/19)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(71) Applicant: Contemporary Amperex Technology Co., Limited
Ningde, Fujian 352100 (CN)

(72) Inventors:
• YANG, Longfei
Ningde, Fujian 352100 (CN)
• YANG, Limei
Ningde, Fujian 352100 (CN)
• LIU, Jiang
Ningde, Fujian 352100 (CN)
• LIU, Xiaomei
Ningde, Fujian 352100 (CN)

(74) Representative: Behr, Wolfgang
Lorenz Seidler Gossel
Rechtsanwälte Patentanwälte
Partnerschaft mbB
Widenmayerstraße 23
80538 München (DE)

(54) **SECONDARY BATTERY AND LITHIUM SUPPLEMENTING METHOD THEREFOR, BATTERY MODULE, BATTERY PACK, AND ELECTRIC DEVICE**

(57) This application provides a secondary battery and a method for supplementing the secondary battery with lithium, a battery module, a battery pack, and an electrical device. The secondary battery includes a housing, an end cap assembly, and an electrode assembly. An opening is made on the housing. The end cap assembly is configured to close the opening of the housing. The electrode assembly is packaged in the housing, and includes a positive electrode plate and a negative electrode plate. The end cap assembly contains a first electrode terminal, a second electrode terminal, and a third electrode terminal. The electrode assembly is electrically connected to the first electrode terminal and the second electrode terminal. The secondary battery further includes a lithium source. The lithium source is disposed on an inner side of the housing and electrically connected to the third electrode terminal. The lithium source includes a lithium metal layer and a metal carrier located between the lithium metal layer and the housing and configured to support the lithium metal layer. This application can precisely control the supplementing speed and the supplement amount of lithium for the secondary battery, and greatly enhance the cycle performance and storage performance of the secondary battery.

FIG. 3

**Description**

**TECHNICAL FIELD**

This application relates to the technical field of batteries, and in particular, to a secondary battery, a method for supplementing the secondary battery with lithium, a battery module, a battery pack, and an electrical device.

**BACKGROUND**

In recent years, with the application and popularization of secondary batteries in various electronic products, new energy vehicles (such as electric buses, passenger cars, taxis, mining trucks, and heavy trucks), energy storage systems, and other industrial sectors, the cycle life of a secondary battery is increasingly a matter of concern. During charge-and-discharge cycles of the secondary battery, active ions (such as lithium ions) are shuttled between a positive electrode plate and a negative electrode plate by intercalating and deintercalating. The active ions are inevitably consumed by structural changes of positive and negative active materials, decomposition of an electrolytic solution, formation and destruction of a solid electrolyte interface (SEI) film on the surface of the negative active material, and the like. Consequently, the capacity of the secondary battery keeps fading, thereby making it difficult to increase a cycle life.

**SUMMARY**

This application aims to provide a secondary battery, a method for supplementing the secondary battery with lithium, a battery module, a battery pack, and an electrical device, with a view to precisely controlling the supplementing speed and the supplement amount of lithium for the secondary battery, and greatly enhancing the cycle performance and storage performance of the secondary battery.

An aspect of this application provides a secondary battery, including a housing, an end cap assembly, and an electrode assembly. An opening is made on the housing. The end cap assembly is configured to close the opening of the housing. The electrode assembly is packaged in the housing, and includes a positive electrode plate and a negative electrode plate. The end cap assembly contains a first electrode terminal, a second electrode terminal, and a third electrode terminal. The electrode assembly is electrically connected to the first electrode terminal and the second electrode terminal. The secondary battery further includes a lithium source. The lithium source is disposed on an inner side of the housing and electrically connected to the third electrode terminal. The lithium source includes a lithium metal layer and a metal carrier located between the lithium metal layer and the housing and configured to support the lithium metal layer. The third electrode terminal is electrically connected to the first electrode terminal or second electrode terminal controllably by an external power supply, so that the lithium source supplements the electrode assembly with lithium.

The secondary battery according to this application is simple in structure and cost-effective. By adjusting parameters such as energizing voltage, energizing current, and energizing time of the external power supply, this application can precisely control the supplementing speed and supplement amount of lithium, supplement the electrode assembly with lithium evenly and quickly, effectively reduce capacity loss of the secondary battery, and enhance the cycle performance and storage performance of the secondary battery.

The lithium metal layer is disposed on a metal carrier. The metal carrier is electrically connected to the third electrode terminal by a wire. In contrast to the practice in which the lithium metal layer is directly disposed on the inner side of the housing, the secondary battery implemented according to this application can increase the utilization rate of the lithium metal layer, and prevent the metallic lithium in a local region of the lithium metal layer from discharging electricity first and forming lithium ions, where the discharge forms an open circuit in the local region and affects the use of the metallic lithium in other regions.

In any embodiment of this application, the housing includes a bottom plate and side plates. The lithium source is disposed on an inner side of the bottom plate and/or an inner side of a side plate. Optionally, the lithium source is disposed on the inner side of the bottom plate. When the lithium source is disposed on the inner side of the bottom plate, a surface of the lithium source is parallel to an end face of the electrode assembly. Therefore, the surface of the lithium source is at equal distances to each circle of electrode plate of the electrode assembly, so that lithium can be intercalated into each circle of electrode plate quickly and evenly when the lithium source supplements the electrode assembly with lithium by means of an external power supply. In addition, when the lithium source is disposed on the inner side of the bottom plate, the lithium metal layer can physically press down on the metal carrier effectively by using gravity of the electrode assembly, so as to ensure high electronic conductivity between the lithium metal layer and the metal carrier.

In any embodiment of this application, the metal carrier is made of a material selected from copper, copper alloy, nickel, nickel alloy, titanium, titanium alloy, silver, silver alloy, or stainless steel.

In any embodiment of this application, the secondary battery further includes an insulation piece located between the lithium source and the electrode assembly, so as to separate the lithium source from the electrode assembly.

In any embodiment of this application, a total capacity C3 of the negative electrode plate and a total capacity C4 of the positive electrode plate satisfy: C3/C4 is 1.0 to 2.1. Optionally, C3/C4 is 1.0 to 1.3. With the total capacity of the negative electrode plate being greater than or equal to the total capacity of the positive electrode plate, during charge-and-discharge cycles of the secondary battery, vacancies provided by the negative active material are sufficient to accommodate the lithium ions intercalated from the lithium metal layer and the positive active material, thereby preventing lithium plating on an anode electrolyte interface.

In any embodiment of this application, the total capacity C3 of the negative electrode plate, the total capacity C4 of the positive electrode plate, and a theoretical capacity C5 of the lithium metal layer satisfy: $C3/(C4 + C5 \times K) \geq 0.2$, where K represents a utilization rate of metallic lithium available in the lithium metal layer for compensating for lithium ions. Optionally, $C3/(C4 + C5 \times K)$ is 0.5 to 1.1. With the electrode assembly satisfying the relationship specified above in this application, lithium plating on the anode electrolyte interface can be effectively prevented, thereby enhancing the cycle performance, storage performance, and safety performance of the secondary battery more effectively.

In any embodiment of this application, the total capacity C4 of the positive electrode plate and the theoretical capacity C5 of the lithium metal layer satisfy: $(C5 \times K)/C4 \times 100\% \geq 3\%$. Optionally, $(C5 \times K)/C4 \times 100\%$ is 5% to 100%. With the electrode assembly satisfying the relationship specified above in this application, the theoretical capacity of the lithium metal layer can meet actual requirements of lithium supplementation, and avoid an excessive mass of the lithium metal layer. The excessive lithium metal layer makes most of the lithium be idle rather than be used for supplementing the electrode assembly with lithium, and in turn, not only increases production cost, but also reduces the mass energy density of the secondary battery.

A second aspect of this application provides a method for supplementing a secondary battery with lithium. The method includes at least the following steps 1 and 2.

Step 1: Providing a secondary battery. The secondary battery includes a housing, an end cap assembly, an electrode assembly, and a lithium source. An opening is made on the housing. The end cap assembly is configured to close the opening of the housing, and contains a first electrode terminal, a second electrode terminal, and a third electrode terminal. The electrode assembly is packaged in the housing and electrically connected to the first electrode terminal and the second electrode terminal. The lithium source is disposed on an inner side of the housing and electrically connected to the third electrode terminal. The lithium source includes a lithium metal layer and a metal carrier located between the lithium metal layer and the housing and configured to support the lithium metal layer.

Step 2: Electrically connecting the third electrode terminal to the first electrode terminal or second electrode terminal by an external power supply, so that the lithium source supplements the electrode assembly with lithium.

The secondary battery obtained by using the lithium supplementing method according to this application achieves greatly improved cycle performance and storage performance.

In any embodiment of this application, the secondary battery further includes an insulation piece located between the lithium source and the electrode assembly, so as to separate the lithium source from the electrode assembly.

In any embodiment of this application, the housing includes a bottom plate and side plates. The lithium source is disposed on an inner side of the bottom plate and/or an inner side of a side plate. Optionally, the lithium source is disposed on the inner side of the bottom plate. When the lithium source is disposed on the inner side of the bottom plate, a surface of the lithium source is parallel to an end face of the electrode assembly. Therefore, the surface of the lithium source is at equal distances to each circle of electrode plate of the electrode assembly, so that lithium can be intercalated into each circle of electrode plate quickly and evenly when the lithium source supplements the electrode assembly with lithium by means of an external power supply. In addition, when the lithium source is disposed on the inner side of the bottom plate, the lithium metal layer can physically press down on the metal carrier effectively by using gravity of the electrode assembly, so as to ensure high electronic conductivity between the lithium metal layer and the metal carrier.

In any embodiment of this application, the external power supply is a charger-di scharger.

In any embodiment of this application, a voltage regulation range of the external power supply is 0 V to 5 V

In any embodiment of this application, an energizing current of the external power supply is 0.002 A to 50 A. Optionally, the energizing current of the external power supply is 0.005 A to 0.1 A. By applying a relatively low current in supplementing the electrode assembly with lithium, the impact caused by concentration polarization to uniformity of lithium supplementing can be reduced, the actual utilization rate of the lithium metal layer can be increased, and it is convenient to precisely control the supplementing speed and the amount of lithium supplemented each time.

A third aspect of this application provides a battery module. The battery module includes the secondary battery according to the first aspect of this application.

A fourth aspect of this application provides a battery pack. The battery pack includes the battery module according to the third aspect of this application.

A fifth aspect of this application provides an electrical device. The electrical device includes at least one of the secondary battery according to the first aspect, the battery module according to the third aspect, or the battery pack according to the fourth aspect of this application.

The battery module, the battery pack, and the electrical device according to this application include the secondary battery according to this application, and therefore, have at least the same advantages as the secondary battery.

**BRIEF DESCRIPTION OF DRAWINGS**

To describe the technical solutions of the embodiments of this application more clearly, the following outlines the drawings to be used in the embodiments of this application. Evidently, the drawings outlined below are merely a part of embodiments of this application. A person of ordinary skill in the art may derive other drawings from such drawings without making any creative efforts.

FIG. 1 is a schematic diagram of a secondary battery according to an embodiment of this application;
FIG. 2 is a schematic exploded view of the secondary battery shown in FIG. 1;
FIG. 3 is a schematic exploded view of a secondary battery according to another embodiment of this application;
FIG. 4 is a schematic diagram of a secondary battery according to another embodiment of this application;
FIG. 5 is a schematic diagram of a secondary battery according to another embodiment of this application;
FIG. 6 is a schematic diagram of a battery module according to an embodiment of this application;
FIG. 7 is a schematic diagram of a battery pack according to an embodiment of this application;
FIG. 8 is a schematic exploded view of the battery pack shown in FIG. 7; and
FIG. 9 is a schematic diagram of an electrical device that contains a secondary battery as a power supply according to an embodiment of this application.

The drawings are not necessarily drawn to scale.

**DETAILED DESCRIPTION OF EMBODIMENTS**

The following describes in detail a secondary battery, a method for supplementing the secondary battery with lithium, a battery module, a battery pack, and an electrical device according to this application with due reference to drawings. However, unnecessary details may be omitted in some cases. For example, a detailed description of a well-known matter or repeated description of an essentially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject-matter set forth in the claims.

A "range" disclosed herein is defined in the form of a lower limit and an upper limit. A given range is defined by selecting a lower limit and an upper limit. The selected lower and upper limits define the boundaries of the given range. A range so defined may be inclusive or exclusive of the end values, and may be arbitrarily combined. That is, any lower limit may be combined with any upper limit to form a range. For example, if a range of 60 to 120 and a range of 80 to 110 are listed for a given parameter, it is expectable that such ranges may be understood as 60 to 110 and 80 to 120. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, the numerical range "0 to 5" means that all real numbers between 0 and 5 inclusive are listed herein, and the range "0 to 5" is just a brief representation of combinations of such numbers. In addition, when a parameter is expressed as an integer greater than or equal to 2, the expression is equivalent to that the parameter is an integer such as 2, 3, 4, 5, 6, 7, 8, 9, 10, 11, 12, and so on.

Unless otherwise expressly specified herein, all embodiments and optional embodiments hereof may be combined with each other to form a new technical solution considered to be included in the content disclosed in this application.

Unless otherwise expressly specified herein, all technical features and optional technical features hereof may be combined with each other to form a new technical solution considered to be included in the content disclosed in this application.

Unless otherwise expressly specified herein, all steps described herein may be performed in sequence or at random, and preferably in sequence. For example, that the method includes steps (a) and (b) indicates that the method may include steps (a) and (b) performed in sequence, or steps (b) and (a) performed in sequence. For example, that the method may further include step (c) indicates that step (c) may be added into the method in any order. For example, the method may include steps (a), (b), and (c), or may include steps (a), (c), and (b), or may include steps (c), (a), and (b), and so on.

Unless otherwise expressly specified herein, "include" and "comprise" mentioned herein mean open-ended inclusion, or closed-ended inclusion. For example, the terms "include" and "comprise" may mean inclusion of other items that are not set out, or inclusion of only the items set out.

Unless otherwise expressly specified herein, the term "or" is inclusive. For example, the phrase "A or B" means "A alone, B alone, or both A and B." More specifically, any one of the following conditions falls within the condition "A or B" : A is true (or existent) and B is false (or absent); A is false (or absent) and B is true (or existent); and, both A and B are true (or existent).

In addition, the technical terms such as "first", "second", and "third" are used merely for ease of description, but not to indicate or imply relative importance or implicitly specify the number of technical features mentioned. In the description of the embodiments of this application, unless otherwise expressly specified, "a plurality of" means two or more.

In the description of the embodiments of this application, unless otherwise expressly specified and defined, the technical terms such as "mounting", "concatenation", "connection", and "fixing" need to be understood in a broad sense, for example, understood as a fixed connection or a detachable connection or integrally formed; or understood as a mechanical connection or an electrical connection; understood as a direct connection, or an indirect connection implemented through an intermediary; or understood as internal communication between two components or interaction between two components. A person of ordinary skill in the art can understand the specific meanings of the terms in the embodiments of this application according to specific situations.

In recent years, considering electricity cost, people impose higher requirements on the lifespan of a secondary battery. Therefore, an effective technical means is required to improve the lifespan of the secondary battery, reduce the electricity cost, and meet the market demand. Currently, the lifespan of a secondary battery is primarily improved by: selecting positive and negative active materials with high cycle performance and storage performance, optimizing components of an electrolytic solution (for example, changing types of organic solvents and additives), optimizing components of a cathode electrolyte interface film and an anode electrolyte interface film, and optimizing conditions of forming an SEI film. All such measures are taken from the perspective of suppressing side reactions of a negative electrode, and are intended to defer the decrease of active ions by throttling. Therefore, the effect of such measures is limited. After such measures are taken, the cycle life of the secondary battery is up to approximately 5000 to 6000 cycles, being far from a desired cycle life that is approximately over 15000 cycles achievable by a long-life new energy vehicle or large-scale energy storage system.

To improve the lifespan and energy density of the secondary battery, another technical solution in the prior art is to increase active ions by supplementing lithium, so as to compensate for irreversible loss of active ions caused by the formation of the SEI film on the surface of a negative active material. A mainstream and relatively mature lithium supplementing technology currently available is a negative electrode lithium supplementation technology. For example, the surface of the negative electrode is overlaid with a lithium metal layer by means of lithium powder or a lithium foil. However, due to chemical properties, metallic lithium is very active and prone to react with moisture in the air. This imposes relatively high requirements on both the environment (air humidity, oxygen content, and the like) and equipment during the lithium supplementation, and increases difficulty of implementation. In addition, the lithium powder is prone to float in the air, resulting in relatively high safety hazards during lithium supplementation. In addition, the supplementing speed and the supplement amount of lithium are not controllable in the prior art. Therefore, lithium is prone to be supplemented excessively, resulting in lithium plating on the anode electrolyte interface or even safety hazards such as internal short circuits of the battery.

To solve the foregoing problems, the inventor of this application has improved the structure of the secondary battery, and hereby discloses a secondary battery that enables precise control of the supplementing speed and supplement amount of lithium and that achieves significantly improved cycle performance and storage performance.

**Secondary Battery**

A secondary battery, also known as a rechargeable battery or storage battery, is a battery that is reusable after the active material is activated by charging the battery that has been discharged. The shape of the secondary battery is not particularly limited in this application, and may be cylindrical, prismatic or any other shape.

The secondary battery according to this application includes a housing, an end cap assembly, and an electrode assembly. An opening is made on the housing. The end cap assembly is configured to close the opening of the housing, and contains a first electrode terminal, a second electrode terminal, and a third electrode terminal. The electrode assembly is packaged in the housing and electrically connected to the first electrode terminal and the second electrode terminal. The electrode assembly includes a positive electrode plate and a negative electrode plate. The secondary battery according to this application further includes a lithium source. The lithium source is disposed on an inner side of the housing and electrically connected to the third electrode terminal. The lithium source includes a lithium metal layer and a metal carrier located between the lithium metal layer and the housing and configured to support the lithium metal layer. The third electrode terminal is electrically connected to the first electrode terminal or second electrode terminal controllably by an external power supply, so that the lithium source supplements the electrode assembly with lithium. The number of electrode assemblies in the secondary battery according to this application may be one or more, and is adjustable as actually required. The material of the housing is not particularly limited, and may be selected as actually required. In some embodiments, the housing may be a hard plastic shell, an aluminum shell, a steel shell, or the like.

The secondary battery according to this application is simple in structure and cost-effective. By adjusting parameters such as energizing voltage, energizing current, and energizing time of the external power supply, this application can precisely control the supplementing speed and supplement amount of lithium, supplement the electrode assembly with lithium evenly and quickly, effectively reduce capacity loss of the secondary battery, and enhance the cycle performance and storage performance of the secondary battery.

The lithium metal layer is disposed on a metal carrier. The metal carrier may be electrically connected to the third electrode terminal by a wire. In contrast to the practice in which the lithium metal layer is directly disposed on the inner side of the housing, the secondary battery implemented according to this application can increase the utilization rate of the lithium metal layer, and prevent the metallic lithium in a local region of the lithium metal layer from discharging electricity first and forming lithium ions, where the discharge forms an open circuit in the local region and affects the use of the metallic lithium in other regions.

When the third electrode terminal is electrically connected to the first electrode terminal or second electrode terminal by an external power supply, the lithium metal layer can lithiate (partly or fully, for example) a negative active material or a positive active material in the electrode assembly, so as to supplement lithium for the positive electrode or negative electrode of the electrode assembly.

The timing of supplementing the secondary battery with lithium is not particularly limited in this application, and may be selected as actually required. For example, the third electrode terminal is electrically connected to the first electrode terminal or second electrode terminal controllably by an external power supply. In this way, the lithium source supplements the electrode assembly with lithium as actually required during preparation (for example, before a chemical formation process, or after the chemical formation process), a charge-and-discharge cycle, storage, repair, or the like of the secondary battery.

For example, the third electrode terminal is electrically connected, controllably by an external power supply, to either the first electrode terminal or the second electrode terminal, whichever is connected to the negative electrode of the electrode assembly. In this way, the lithium source supplements the negative electrode of the electrode assembly with lithium, so as to compensate for the loss of lithium ions caused by the formation of the SEI film on the surface of the negative active material. In addition, during preparation of the secondary battery, by adjusting the energizing voltage, energizing current, energizing time, and other parameters of the external power supply, the lithium source can not only compensate for the loss of lithium ions caused by the formation of the SEI film on the surface of the negative active material, but also pre-lithiate the negative electrode and store surplus lithium ions in the negative electrode. During the charge-and-discharge cycles of the secondary battery, the surplus lithium ions can be deintercalated to increase the lithium ions that can migrate between the positive electrode and the negative electrode, thereby effectively reducing the capacity loss of the secondary battery, and enhancing the cycle performance and storage performance of the secondary battery.

For example, during the charge-and-discharge cycles, storage, repair, and the like of the secondary battery, depending on the fading status of a discharge capacity of the secondary battery, the third electrode terminal is electrically connected to the first electrode terminal or second electrode terminal by an external power supply. In this way, the lithium source supplements lithium for the positive electrode or negative electrode of the electrode assembly to increase the lithium ions that can migrate between the positive electrode and the negative electrode, thereby effectively reducing the capacity loss of the secondary battery and enhancing the cycle performance and storage performance of the secondary battery. In some embodiments, the supplement amount of lithium may be less than or equal to a decrement by which the capacity of the secondary battery declines during discharge.

The number of times that the secondary battery is supplemented with lithium is not particularly limited in this application, and may be selected as actually required. For example, the lithium is supplemented for one or more times as required during preparation, a charge-and-discharge cycle, storage, repair, and the like of the secondary battery. The amount of lithium supplemented each time is adjusted as actually required. For example, the amount is controlled precisely by adjusting the energizing voltage, energizing current, energizing time, and other parameters of the external power supply.

In some embodiments, as actually required, the external power supply is turned on and the voltage is adjusted to 0 V The third electrode terminal is electrically connected to the first electrode terminal or second electrode terminal. The electrode assembly is supplemented with lithium by means of a spontaneous potential difference between the third electrode terminal and the first electrode terminal or second electrode terminal. In some embodiments, as actually required, the external power supply is turned on and the third electrode terminal is electrically connected to the first electrode terminal or second electrode terminal. Subsequently, the voltage of the external power supply is adjusted to an appropriate value to mandatorily discharge the lithium source electrically connected to the third electrode terminal, so as to supplement lithium for the positive electrode or negative electrode of the electrode assembly.

The following describes the secondary battery according to this application with reference to drawings.

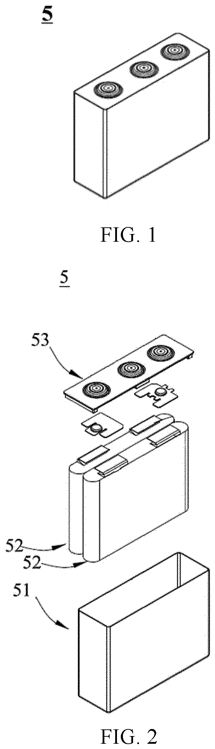

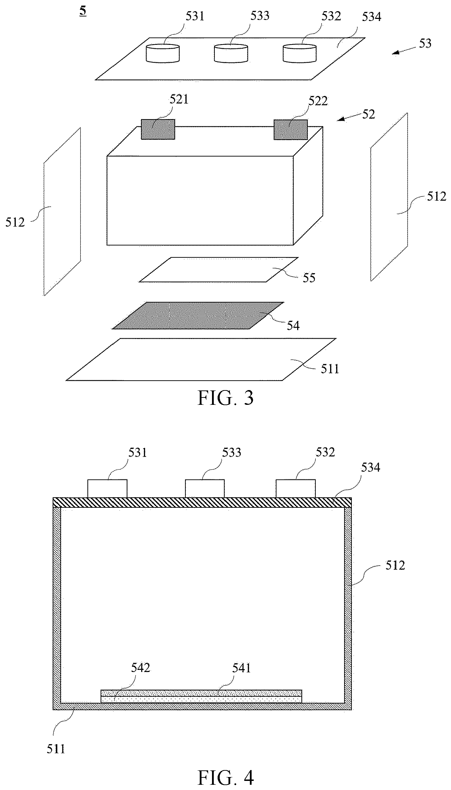

FIG. 1 is a schematic diagram of a secondary battery according to an embodiment of this application. FIG. 2 is a schematic exploded view of the secondary battery shown in FIG. 1. As shown in FIG. 1 and FIG. 2, the secondary battery 5 includes a housing 51, an end cap assembly 53, and an electrode assembly 52. FIG. 3 is a schematic exploded view of a secondary battery according to another embodiment of this application. As shown in FIG. 3, an opening is made on the housing 51. The end cap assembly 53 is configured to close the opening of the housing 51. The end cap assembly 53 contains a first electrode terminal 531, a second electrode terminal 532, and a third electrode terminal 533. The electrode assembly 52 is packaged in the housing 51 and electrically connected to the first electrode terminal 531 and the second electrode terminal 532.

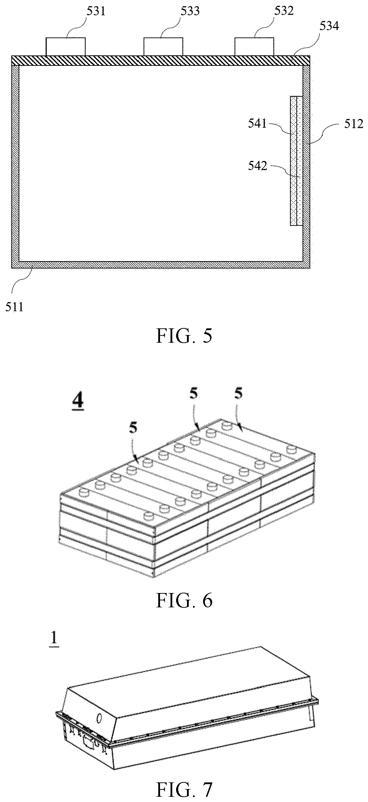

As shown in FIG. 3, the secondary battery according to this application further includes a lithium source 54. The lithium source 54 is disposed on an inner side of the housing 51 and electrically connected to the third electrode terminal 533. As shown in FIG. 4 and FIG. 5, the lithium source 54 includes a lithium metal layer 541 and a metal carrier 542 located between the lithium metal layer 541 and the housing 51 and configured to support the lithium metal layer 541.

In some embodiments, the lithium source is disposed on the inner side of the housing by welding, but without being limited to welding.

In some embodiments, the material of the metal carrier is not particularly limited. As an example, the metal carrier may be made of a material selected from copper, copper alloy, nickel, nickel alloy, titanium, titanium alloy, silver, silver alloy, or stainless steel. Optionally, the metal carrier is made of a material selected from copper, copper alloy, or stainless steel. The shape of the metal carrier is not particularly limited, and may be selected as actually required. For example, the metal carrier is a metal foil or a metal screen.

In some embodiments, the lithium metal layer may be one or more selected from, but without being limited to, lithium powder, lithium ingots, or lithium sheets. The lithium metal layer may be disposed on the surface of the metal carrier by calendering, but without being limited to calendering.

As shown in FIG. 4 and FIG. 5, in some embodiments, the housing 51 includes a bottom plate 511 and side plates 512. The side plates 512 are connected to the bottom plate 511. The bottom plate 511 and the side plates 512 close in to form an accommodation cavity with an opening. The end cap assembly 53 is configured to close the opening, so as to close the accommodation cavity and package the electrode assembly (not shown) in the housing 51.

In some embodiments, the lithium source is disposed on the inner side of the bottom plate and/or the inner side of a side plate. As shown in FIG. 4, in some embodiments, the lithium source 54 is disposed on the inner side of the bottom plate 511. As shown in FIG. 5, in some embodiments, the lithium source 54 is disposed on the inner side of the side plate 512. Optionally, the lithium source is disposed on the inner side of the bottom plate. When the lithium source is disposed on the inner side of the side plate, the surface of the lithium source is parallel to a major surface of the electrode assembly. In this case, uneven lithiation is prone to occur at a winding ending portion of the electrode assembly. When the lithium source is disposed on the inner side of the bottom plate, the surface of the lithium source is parallel to an end face of the electrode assembly. In this way, the surface of the lithium source is at equal distances to each circle of electrode plate of the electrode assembly, so that lithium can be intercalated into each circle of electrode plate quickly and evenly when the lithium source supplements the electrode assembly with lithium by means of an external power supply. In addition, when the lithium source is disposed on the inner side of the bottom plate, the lithium metal layer can physically press down on the metal carrier effectively by using gravity of the electrode assembly, so as to ensure high electronic conductivity between the lithium metal layer and the metal carrier.

As shown in FIG. 3, in some embodiments, the secondary battery according to this application further includes an insulation piece 55. The insulation piece 55 is located between the lithium source 54 and the electrode assembly 52 to separate the lithium source 54 from the electrode assembly 52. The type of the insulation piece is not particularly limited, and may be any well-known porous film that is highly stable both chemically and mechanically. For example, in some embodiments, the material of the porous film may be one or more selected from, but without being limited to, glass fibers, non-woven fabric, polyethylene, polypropylene, or polyvinylidene fluoride. The porous film may be a single-layer film or a multilayer composite film. When the porous film is a multilayer composite film, materials of different layers may be identical or different.

As shown in FIG. 3, in some embodiments, the end cap assembly 53 includes an end cap 534. The end cap 534 covers the opening of the housing 51 and is connected to the housing 51, thereby closing the opening of the housing 51. Generally, the end cap 534 is flat plate-shaped. In some embodiments, the end cap 534 is welded to the housing 51. The first electrode terminal 531, the second electrode terminal 532, and the third electrode terminal 533 are fixed onto the end cap 534 to form the end cap assembly 53. Of the first electrode terminal and the second electrode terminal, one is a positive electrode terminal, and the other is a negative electrode terminal. A connecting member (not shown), also referred to as a current collecting member, may be further disposed on the first electrode terminal and the second electrode terminal, and configured to electrically connect the electrode assembly to the first electrode terminal and the second electrode terminal.

In some embodiments, the electrode assembly includes a positive electrode plate and a negative electrode plate. The positive electrode plate is electrically connected to one of the first electrode terminal or the second electrode terminal, and the negative electrode plate is electrically connected to the other of the first electrode terminal or the second electrode terminal, thereby electrically connecting the electrode assembly to the first electrode terminal and the second electrode terminal. The positive electrode plate includes a positive current collector and a positive film layer disposed on at least one surface of the positive current collector and containing a positive active material. For example, the positive current collector includes two surfaces opposite to each other in a thickness direction thereof. The positive film layer is disposed on either or both of the two opposite surfaces of the positive current collector. As an example, a surface of the positive current collector is coated with the positive film layer. Of the positive current collector, a part not coated with the positive film layer protrudes from a part coated with the positive film layer, and the part not coated with the positive film layer serves as a positive tab. The negative electrode plate includes a negative current collector and a negative film layer disposed on at least one surface of the negative current collector and containing a negative active material. For example, the negative current collector includes two surfaces opposite to each other in a thickness direction thereof. The negative film layer is disposed on either or both of the two opposite surfaces of the negative current collector. As an example, a surface of the negative current collector is coated with the negative film layer. Of the negative current collector, a part not coated with the negative film layer protrudes from a part coated with the negative film layer, and the part not coated with the negative film layer serves as a negative tab. In some embodiments, in order to ensure passage of a large current without fusing off, the positive tab is plural in number, and the plurality of positive tabs are stacked together; the negative tab is plural in number, and the plurality of negative tabs are stacked together.

In some embodiments, the positive tab is electrically connected to one of the first electrode terminal or the second electrode terminal, and the negative tab is electrically connected to the other of the first electrode terminal or the second electrode terminal, thereby electrically connecting the electrode assembly to the first electrode terminal and the second electrode terminal. For example, the positive tabs of one or more electrode assemblies are electrically connected to one of the first electrode terminal or the second electrode terminal by one connecting member, and the negative tabs of the one or more electrode assemblies are electrically connected to the other of the first electrode terminal or the second electrode terminal by another connecting member. As shown in FIG. 3, the tab 521 is electrically connected to the first electrode terminal, and the tab 522 is electrically connected to the second electrode terminal. In some embodiments, the tab 521 is a positive tab and the tab 522 is a negative tab. In other embodiments, the tab 521 is a negative tab and the tab 522 is a positive tab.

In some embodiments, the positive electrode plate and the negative electrode plate may be made into an electrode assembly by winding or stacking.

The lithium metal layer in the lithium source is configured to provide lithium ions that can migrate between the positive electrode and the negative electrode. The mass of the lithium metal layer is not particularly limited, and may be selected as required. In some embodiments, a ratio of a mass of the lithium metal layer to a total mass of the negative active materials is 0.001: 1 to 0. 1: 1. For example, the ratio of the mass of the lithium metal layer to the total mass of the negative active materials is 0.001: 1, 0.002: 1, 0.005: 1, 0.01: 1, 0.02: 1, 0.03: 1, 0.04: 1, 0.05: 1, 0.06: 1, 0.07: 1, 0.08: 1, 0.09: 1,0.1: 1, or falls within a range formed by any values above. Optionally, the ratio of the mass of the lithium metal layer to the total mass of the negative active materials is 0.005: 1 to 0.03: 1. With the electrode assembly satisfying the relationship specified above in this application, the mass of the lithium metal layer can meet actual requirements of lithium supplementation, and avoid an excessive mass of the lithium metal layer. The excessive lithium metal layer makes most of the lithium be idle rather than be used for supplementing the electrode assembly with lithium, and in turn, not only increases production cost, but also reduces the mass energy density of the secondary battery.

In some embodiments, a capacity C1 per unit area of the negative electrode plate and a capacity C2 per unit area of the positive electrode plate satisfy: C1/C2 is 1.0 to 2.1. For example, C1/C2 is 1.0, 1.1, 1.2, 1.3, 1.4, 1.5, 1.6, 1.7, 1.8, 1.9, 2.0, 2.1, or falls within a range formed by any values above. Optionally, C1/C2 is 1.0 to 2.0, 1.0 to 1.9, 1.0 to 1.8, 1.0 to 1.7, 1.0 to 1.6, 1.0 to 1.5, 1.0 to 1.4, or 1.0 to 1.3. With the capacity per unit area of the negative electrode plate being greater than or equal to the capacity per unit area of the positive electrode plate, during charge-and-discharge cycles of the secondary battery, vacancies provided by the negative active material are sufficient to accommodate the lithium ions intercalated from the lithium metal layer and the positive active material, thereby preventing lithium plating on an anode electrolyte interface.

In some embodiments, the total capacity C3 of the negative electrode plate and the total capacity C4 of the positive electrode plate satisfy: C3/C4 is 1.0 to 2.1. For example, C3/C4 is 1.0, 1.1, 1.2, 1.3, 1.4, 1.5, 1.6, 1.7, 1.8, 1.9, 2.0, 2.1, or falls within a range formed by any values above. Optionally, C3/C4 is 1.0 to 2.0, 1.0 to 1.9, 1.0 to 1.8, 1.0 to 1.7, 1.0 to 1.6, 1.0 to 1.5, 1.0 to 1.4, or 1.0 to 1.3. With the total capacity of the negative electrode plate being greater than or equal to the total capacity of the positive electrode plate, during charge-and-discharge cycles of the secondary battery, vacancies provided by the negative active material are sufficient to accommodate the lithium ions intercalated from the lithium metal layer and the positive active material, thereby preventing lithium plating on an anode electrolyte interface.

In some embodiments, the total capacity C3 of the negative electrode plate, the total capacity C4 of the positive electrode plate, and the theoretical capacity C5 of the lithium metal layer satisfy: $C3/(C4 + C5 \times K) \geq 0.2$, where K represents a utilization rate of metallic lithium available in the lithium metal layer for compensating for lithium ions. For example, $C3/(C4 + C5 \times K) \geq 0.3, \geq 0.4, \geq 0.5, \geq 0.6, \geq 0.7, \geq 0.8, \geq 0.9, \geq 1.0, \geq 1.1, \geq 1.2, \geq 1.3, \geq 1.4, \geq 1.5, \geq 1.6, \geq 1.7,$ or $\geq 1.8$. Optionally, $C3/(C4 + C5 \times K)$ is 0.5 to 1.8, 0.5 to 1.7, 0.5 to 1.6, 0.5 to 1.5, 0.5 to 1.4, 0.5 to 1.3, 0.5 to 1.2, or 0.5 to 1.1. With the electrode assembly satisfying the relationship specified above in this application, lithium plating on the anode electrolyte interface can be effectively prevented, thereby enhancing the cycle performance, storage performance, and safety performance of the secondary battery more effectively. With the electrode assembly satisfying the relationship specified above in this application, the vacancies provided by the negative active material in the negative film layer are sufficient to accommodate all lithium ions intercalated from the lithium metal layer and the positive active material, implement one-time intercalation of lithium ions, and ensure that no lithium plating occurs on the anode electrolyte interface; or, the negative active material in the negative film layer does not provide the vacancies that are sufficient to intercalate all lithium ions at one time, but ensures that no lithium plating occurs on the anode electrolyte interface when the positive electrode or negative electrode of the electrode assembly is supplemented with lithium by adjusting the external power supply during the charge-and-discharge cycles, storage, repair, and the like of the secondary battery.

In some embodiments, the total capacity C4 of the positive electrode plate and the theoretical capacity C5 of the lithium metal layer satisfy: $(C5 \times K)/C4 \times 100\% \geq 3\%$. For example, $(C5 \times K)/C4 \times 100\% \geq 5\%, \geq 8\%, \geq 10\%, \geq 15\%, \geq 20\%, \geq 30\%, \geq 40\%, \geq 50\%, \geq 60\%, \geq 70\%, \geq 80\%, > 90\%,$ or $\geq 100\%$. Optionally, $(C5 \times K)/C4 \times 100\%$ is 5% to 100%. With the electrode assembly satisfying the relationship specified above in this application, the theoretical capacity of the lithium metal layer can meet actual requirements of lithium supplementation, and avoid an excessive mass of the lithium metal layer. The excessive lithium metal layer makes most of the lithium be idle rather than be used for supplementing the electrode assembly with lithium, and in turn, not only increases production cost, but also reduces the mass energy density of the secondary battery.

In this application, the capacity C1 per unit area of the negative electrode plate is equal to the mass of the negative active material per unit area of the negative electrode plate multiplied by the reversible gram capacity of the negative active material. The capacity C2 per unit area of the positive electrode plate is equal to the mass of the positive active material per unit area of the positive electrode plate multiplied by the reversible gram capacity of the positive active material. The total capacity C3 of the negative electrode plate is equal to the total mass of the negative active materials in the negative electrode plate multiplied by the reversible gram capacity of the negative active material. The total capacity C4 of the positive electrode plate is equal to the total mass of the positive active material in the positive electrode plate multiplied by the reversible gram capacity of the positive active material. The theoretical capacity of the lithium metal layer C5 is equal to the total mass of the metallic lithium in the lithium metal layer multiplied by the theoretical gram capacity of metallic lithium.

In this application, the capacity C1 per unit area of the negative electrode plate, the capacity C2 per unit area of the positive electrode plate, the total capacity C3 of the negative electrode plate, the total capacity C4 of the positive electrode plate, and the theoretical capacity C5 of the lithium metal layer are measured in the same unit, for example, in Ah or mAh. The "total mass of the negative active materials" means the total mass of all negative active materials in the negative electrode plate. When the negative film layer is disposed on any one of the two opposite surfaces of the negative current collector, the mass of the negative active material in the negative film layer is the total mass of the negative active materials. When the negative film layer is disposed on both of the two opposite surfaces of the negative current collector, the sum of the mass of the negative active materials in the negative film layers located on the two opposite surfaces of the negative current collector is the total mass of the negative active materials. The "total mass of the positive active materials" means the total mass of all positive active materials in the positive electrode plate. When the positive film layer is disposed on any one of the two opposite surfaces of the positive current collector, the mass of the positive active material in the positive film layer is the total mass of the positive active materials. When the positive film layer is disposed on both of the two opposite surfaces of the positive current collector, the sum of the mass of the positive active materials in the positive film layers located on the two opposite surfaces of the positive current collector is the total mass of the positive active materials.

In this application, the theoretical gram capacity of the metallic lithium is 3860 mAh/g. In the lithium metal layer, some metallic lithium may be oxidized, and some metallic lithium may form lithium ions to participate in forming an anode electrolyte interface film. Therefore, the utilization rate K of the metallic lithium available in the lithium metal layer for compensating for lithium ions is usually less than 100%. In other words, K represents a percentage of the total amount of the metallic lithium actually available for compensating for lithium ions in the total amount of initially disposed metallic lithium. As investigated, the utilization rate K of the metallic lithium available in the lithium metal layer for compensating for lithium ions is generally 75% to 85%, for example, 78% to 82%, and for another example, 80%. Definitely, the utilization rate K can be improved by reducing oxidation of the metallic lithium in the lithium metal layer and reducing the metallic lithium that forms lithium ions participating in forming an anode electrolyte interface film.

In some embodiments, the secondary battery includes a housing, an end cap assembly, and an electrode assembly. An opening is made on the housing. The end cap assembly is configured to close the opening of the housing, and contains a first electrode terminal, a second electrode terminal, and a third electrode terminal. The electrode assembly is packaged in the housing and electrically connected to the first electrode terminal and the second electrode terminal.

The secondary battery further includes a lithium source and an insulation piece. The lithium source is disposed on an inner side of a bottom plate of the housing and electrically connected to the third electrode terminal. The lithium source includes a lithium metal layer and a metal carrier located between the lithium metal layer and the housing and configured to support the lithium metal layer. The insulation piece is located between the lithium source and the electrode assembly to separate the lithium source from the electrode assembly. The electrode assembly includes a positive electrode plate and a negative electrode plate. The ratio of the mass of the lithium metal layer to the total mass of the negative active materials is 0.001: 1 to 0.1: 1. The capacity C1 per unit area of the negative electrode plate and the capacity C2 per unit area of the positive electrode plate satisfy: C1/C2 is 1.0 to 2.1. The total capacity C3 of the negative electrode plate and the total capacity C4 of the positive electrode plate satisfy: C3/C4 is 1.0 to 2.1. The total capacity C3 of the negative electrode plate, the total capacity C4 of the positive electrode plate, and the theoretical capacity C5 of the lithium metal layer satisfy: C3/(C4 + C5 × K) ≥ 0.2. The total capacity C4 of the positive electrode plate and the theoretical capacity C5 of the lithium metal layer satisfy: (C5 × K)/C4 × 100% ≥ 3%.

In some embodiments, the positive active material may include one or more of lithium transition metal oxide, olivine-structured lithium-containing phosphate, or a modified compound thereof. In the secondary battery according to this application, the modified compound of each positive active material described above may be formed by modifying the positive active material, for example, by doping, surface coating, or both doping and surface coating. As an example, the lithium transition metal oxide may include one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, or a modified compound thereof. As an example, the olivine-structured lithium-containing phosphate may include one or more of lithium iron phosphate, a composite of lithium iron phosphate and carbon, lithium manganese phosphate, a composite of lithium manganese phosphate and carbon, lithium manganese iron phosphate, a composite of lithium manganese iron phosphate and carbon, or a modified compound thereof. One of the positive active materials may be used alone, or at least two thereof may be combined and used together.

In some embodiments, the positive active materials include one or more of olivine-structured lithium-containing phosphate or a modified compound thereof. The olivine-structured lithium-containing phosphate is highly stable in structure, and does not change the structure during cycles of the secondary battery which leads to capacity loss like other positive active materials. Therefore, the capacity fading of the secondary battery that uses the olivine-structured lithium-containing phosphate mainly stems from the loss of lithium ions that can migrate between the positive electrode and the negative electrode inside the secondary battery. Therefore, after the third electrode terminal is electrically connected to the first electrode terminal or second electrode terminal controllably by an external power supply, the electrode assembly is supplemented with lithium to greatly enhance the cycle performance and storage performance of the secondary battery.

The positive film layer generally includes a positive active material, an optional binder, and an optional conductive agent. The positive film layer is generally formed by coating the positive current collector with a positive slurry and then performing drying and cold pressing. The positive slurry is generally formed by dispersing a positive active material, an optional conductive agent, an optional binder, and any other ingredients into a solvent and then stirring well. The solvent may be, but without being limited to, N-methyl-pyrrolidone (NMP). The type and content of the conductive agent and the binder are not particularly limited, and may be selected as actually required. As an example, the binder may include one or more of polyvinylidene difluoride (PVDF), polytetrafluoroethylene (PTFE), poly(vinylidene fluoride-co-tetrafluoroethylene-co-propylene), poly (vinylidene fluoride-co-hexafluoropropylene-co-tetrafluoroethylene), poly(tetrafluoroethylene-co-hexafluoropropylene), or fluorinated acrylate resin. As an example, the conductive agent may include one or more of superconductive carbon, acetylene black, carbon black, Ketjen black, carbon dots, carbon nanotubes, graphene, or carbon nanofibers.

The type of the positive current collector is not particularly limited, and may be selected as actually required. In some embodiments, the positive current collector may be a metal foil or a composite current collector. As an example of the metal foil, the positive current collector may be an aluminum foil. The composite current collector may include a polymer material base layer and a metal material layer formed on at least one surface of the polymer material base layer. As an example, the metal material may be one or more selected from aluminum, aluminum alloy, nickel, nickel alloy, titanium, titanium alloy, silver, or silver alloy. As an example, the polymer material base layer may be one or more selected from polypropylene, polyethylene terephthalate, polybutylene terephthalate, polystyrene, polyethylene, or the like.

In addition, in the secondary battery according to this application, the positive electrode plate does not exclude additional functional layers other than the positive film layer. For example, in some embodiments, the positive electrode plate according to this application may further include a conductive undercoat (for example, formed of a conductive agent and a binder) disposed between the positive current collector and the positive film layer. In other embodiments, the positive electrode plate according to this application further includes a protection layer overlaying the surface of the positive film layer.

In some embodiments, the type of the negative active material is not particularly limited, and may be any negative active material well known in the art for use in a secondary battery. As an example, the negative active material may include one or more of graphite, soft carbon, hard carbon, mesocarbon microbeads, carbon fibers, carbon nanotubes, silicon-based materials, tin-based materials, or lithium titanium oxide. The silicon-based material may include one or more of simple-substance silicon, oxide of silicon, silicon-carbon composite, silicon-nitrogen composite, or silicon alloy. The tin-based material may include one or more of simple-substance tin, oxide of tin, or tin alloy. This application is not limited to such materials, and other conventional materials well known for use as a negative active material of a secondary battery may be used instead. One of the negative active materials may be used alone, or at least two thereof may be used in combination.

The negative film layer generally includes a negative active material, an optional binder, an optional conductive agent, and other optional agents. The negative film layer is generally formed by coating the negative current collector with a negative slurry and then performing drying and cold pressing. The negative slurry is generally formed by dispersing a negative active material, an optional conductive agent, an optional binder, and other optional agents into a solvent and then stirring well. The solvent may be, but without being limited to, N-methyl-pyrrolidone (NMP) or deionized water. The type and content of the conductive agent and the binder are not particularly limited, and may be selected as actually required. As an example, the conductive agent may include one or more of superconductive carbon, carbon black (such as acetylene black and Ketjen black), carbon dots, carbon nanotubes, graphene, or carbon nanofibers. As an example, the binder may include one or more of styrenebutadiene rubber (SBR), water-soluble unsaturated resin SR-1B, aqueous acrylic resin (such as polyacrylic acid PAA, polymethacrylic acid PMAA, or polyacrylic acid sodium PAAS), polyacrylamide (PAM), polyvinyl alcohol (PVA), sodium alginate (SA), or carboxymethyl chitosan (CMCS). Other optional agents may include a thickener (such as sodium carboxymethyl cellulose CMC-Na), a PTC thermistor material, and the like.

The type of the negative current collector is not particularly limited, and may be selected as actually required. In some embodiments, the negative current collector may be a metal foil or a composite current collector. As an example of the metal foil, the negative current collector may be a copper foil. The composite current collector may include a polymer material base layer and a metal material layer formed on at least one surface of the polymer material base layer. As an example, the metal material may be one or more selected from copper, copper alloy, nickel, nickel alloy, titanium, titanium alloy, silver, or silver alloy. As an example, the polymer material base layer may be one or more selected from polypropylene (PP), polyethylene terephthalate (PET), polybutylene terephthalate (PBT), polystyrene (PS), polyethylene (PE), or the like.

In addition, in the secondary battery according to this application, the negative electrode plate does not exclude additional functional layers other than the negative film layer. For example, in some embodiments, the negative electrode plate according to this application may further include a conductive undercoat (for example, formed of a conductive agent and a binder) disposed between the negative current collector and the negative film layer. In other embodiments, the negative electrode plate according to this application further includes a protection layer overlaying the surface of the negative film layer.

**Electrolyte**

The secondary battery according to this application further includes an electrolyte. The electrolyte serves to conduct the active ions between the positive electrode plate and the negative electrode plate. The type of the electrolyte is not particularly limited, and may be selected as required. For example, the electrolyte may be at least one selected from a solid-state electrolyte or a liquid-state electrolyte (that is, electrolytic solution).

In some embodiments, the electrolyte is an electrolytic solution. The electrolytic solution includes an electrolyte salt and a solvent.

In some embodiments, the type of the electrolyte salt is not particularly limited, and may be selected as actually required. As an example, the electrolyte salt may be one or more selected from lithium hexafluorophosphate (LiPF$_6$), lithium tetrafluoroborate (LiBF$_4$), lithium perchlorate (LiClO$_4$), lithium hexafluoroarsenate (LiAsF$_6$), lithium bisfluorosulfonimide (LiFSI), lithium trifluoromethanesulfonate (LiTFS), lithium difluoro(oxalato) borate (LiDFOB), lithium bis(oxalato)borate (LiBOB), lithium difluorophosphate (LiPO$_2$F$_2$), lithium difluoro(bisoxalato)phosphate (LiDFOP), lithium tetrafluoro(oxalato)phosphate (LiTFOP), LiN(SO$_2$RF)$_2$, or LiN(SO$_2$F)(SO$_2$RF), where RF represents CnF$_{2n+1}$ and n is an integer ranging from 1 to 10. Optionally, the electrolyte salt is one or more selected from LiPF$_6$ or LiN(SO$_2$RF)$_2$. Further, the electrolyte salt is one or more selected from LiPF$_6$ or lithium bis(trifluoromethanesulfonyl)imide (LiTFSI).

In some embodiments, the type of the solvent is not particularly limited, and may be selected as actually required. As an example, the solvent may be one or more selected from ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), ethyl methyl sulfone (EMS), or (ethylsulfonyl)ethane (ESE). In addition, the organic solvent may further include an ionic liquid. One of the foregoing organic solvents may be used alone, or at least two thereof may be used in combination.

In some embodiments, the electrolytic solution further optionally includes an additive. For example, the additive may include a negative film-forming additive, a positive film-forming additive, and additives that can improve some performance of the battery, for example, an additive that improves overcharge performance of the battery, an additive that improves high-temperature performance of the battery, and an additive that improves low-temperature performance of the battery, and the like.

**Separator**

Secondary batteries that employ an electrolytic solution and some secondary batteries that employ a solid-state electrolyte further contain a separator. The separator is disposed between the positive electrode plate and the negative electrode plate to serve an isolation purpose. The type of the separator is not particularly limited, and may be any porous separator well known as being highly stable both chemically and mechanically.

In some embodiments, the material of the separator may be one or more selected from, but without being limited to, glass fibers, non-woven fabric, polyethylene, polypropylene, or polyvinylidene fluoride. The separator may be a single-layer film or a multilayer composite film. When the separator is a multilayer composite film, materials of different layers may be identical or different.

In some embodiments, the separator may be coated with a ceramic coating or a metal oxide coating.

**Preparation Methods**

An embodiment of this application further provides a method for preparing a secondary battery, but the method for preparing a secondary battery in this application is not limited to the method described herein. An illustrative preparation method may include the steps of: making the positive electrode plate and the negative electrode plate into an electrode assembly by winding or stacking; disposing a lithium source on the inner side of a housing on which an opening is made, where the lithium source includes a lithium metal layer and a metal carrier located between the lithium metal layer and the housing and configured to support the lithium metal layer; and assembling the housing, the end cap assembly, and the electrode assembly into a secondary battery. The end cap assembly contains a first electrode terminal, a second electrode terminal, and a third electrode terminal. The lithium source is electrically connected to the third electrode terminal, and the electrode assembly is electrically connected to the first electrode terminal and the second electrode terminal.

The secondary battery according to this application is simple to manufacture and cost-effective. The third electrode terminal is electrically connected to the first electrode terminal or second electrode terminal by an external power supply, so that the lithium source supplements the electrode assembly with lithium.

Method for supplementing a secondary battery with lithium

A second aspect of embodiments of this application provides a method for supplementing a secondary battery with lithium. The method includes at least the following steps 1 and 2.

Step 1: Providing a secondary battery. The secondary battery includes a housing, an end cap assembly, an electrode assembly, and a lithium source. An opening is made on the housing. The end cap assembly is configured to close the opening of the housing, and contains a first electrode terminal, a second electrode terminal, and a third electrode terminal. The electrode assembly is packaged in the housing and electrically connected to the first electrode terminal and the second electrode terminal. The lithium source is disposed on an inner side of the housing and electrically connected to the third electrode terminal. The lithium source includes a lithium metal layer and a metal carrier located between the lithium metal layer and the housing and configured to support the lithium metal layer.

Step 2: Electrically connecting the third electrode terminal to the first electrode terminal or second electrode terminal by an external power supply, so that the lithium source supplements the electrode assembly with lithium.

The secondary battery obtained by using the lithium supplementing method according to this application achieves greatly improved cycle performance and storage performance.

In some embodiments, the secondary battery further includes an insulation piece located between the lithium source and the electrode assembly, so as to separate the lithium source from the electrode assembly.

In some embodiments, the housing includes a bottom plate and side plates. The side plates are connected to the bottom plate. The lithium source is disposed on an inner side of the bottom plate and/or an inner side of a side plate. Optionally, the lithium source is disposed on the inner side of the bottom plate.

In some embodiments, the third electrode terminal is electrically connected to a negative electrode of the external power supply, and the first electrode terminal or second electrode terminal is electrically connected to a positive electrode of the external power supply. In this way, the lithium source discharges electricity to generate lithium ions, so as to supplement the electrode assembly with lithium.

Optionally, the external power supply is a charger-discharger.

Optionally, a voltage regulation range of the external power supply is 0 V to 5 V When the voltage of the external power supply is 0 V, it indicates that the electrode assembly is supplemented with lithium by means of a spontaneous potential difference between the third electrode terminal and the first electrode terminal or second electrode terminal.

In some embodiments, an energizing current of the external power supply is 0.002 Ato 50 A. Optionally, the energizing current of the external power supply is 0.005 A to 0.1 A. By applying a relatively low current in supplementing the electrode assembly with lithium, the impact caused by concentration polarization to uniformity of lithium supplementing can be reduced, the actual utilization rate of the lithium metal layer can be increased, and it is convenient to precisely control the supplementing speed and the amount of lithium supplemented each time. When lithium is supplemented during a charge-and-discharge cycle, storage, repair, or the like of the secondary battery, a preferable manner is: discharging the lithium source to generate lithium ions by adjusting the external power supply after the secondary battery is fully charged, and supplementing the electrode assembly with lithium, where the supplement amount of lithium may be the same as a decrement by which the capacity of the secondary battery declines during cycling.

In some embodiments, the total capacity C3 of the negative electrode plate and the total capacity C4 of the positive electrode plate satisfy: C3/C4 is 1.0 to 2.1. Optionally, C3/C4 is 1.0 to 1.3.

In some embodiments, the total capacity C3 of the negative electrode plate, the total capacity C4 of the positive electrode plate, and the theoretical capacity C5 of the lithium metal layer satisfy: $C3/(C4 + C5 \times K) \geq 0.2$, where K represents a utilization rate of metallic lithium available in the lithium metal layer for compensating for lithium ions. Optionally, $C3/(C4 + C5 \times K)$ is 0.5 to 1.1.

In some embodiments, the total capacity C4 of the positive electrode plate and the theoretical capacity C5 of the lithium metal layer satisfy: $(C5 \times K)/C4 \times 100\% \geq 3\%$. Optionally, $(C5 \times K)/C4 \times 100\%$ is 5% to 100%.

In some embodiments, the number of times that the electrode assembly is supplemented with lithium is one or more. In some embodiments, for the lithium supplemented each time, the energizing current Ii and the energizing time Ti of the external power supply, the total capacity C3 of the negative electrode plate, the total capacity C4 of the positive electrode plate, and the theoretical capacity C5 of the lithium metal layer satisfy: $C3/(C4 + C5 \times K) \leq C3/(C4 + Ii \times Ti) < C3/C4$, where K represents a utilization rate of metallic lithium available in the lithium metal layer for compensating for lithium ions. $I_1 \times T_1$ represents the theoretical capacity of the lithium supplemented each time. The measurement unit of $I_1 \times T_1$ is identical to that of the total capacity C3 of the negative electrode plate, the total capacity C4 of the positive electrode plate, and the theoretical capacity C5 of the lithium metal layer, and is Ah or mAh, for example.

The timing of supplementing the secondary battery with lithium is not particularly limited in this application, and may be selected as actually required. For example, the third electrode terminal is electrically connected to the first electrode terminal or second electrode terminal controllably by an external power supply. In this way, the lithium source can supplement the electrode assembly with lithium as actually required during preparation (for example, before a chemical formation process, or after the chemical formation process), a charge-and-discharge cycle, storage, repair, or the like of the secondary battery. In some embodiments, when lithium is supplemented during preparation (for example, before chemical formation, or after chemical formation) of the secondary battery, an energizing current $I_2$ and energizing time $T_2$ of the external power supply, the total capacity C3 of the negative electrode plate, and the total capacity C4 of the positive electrode plate satisfy: $C3/(C4 + I_2 \times T_2) \geq 1.02$. With the electrode assembly satisfying the relationship specified above in this application, the vacancies provided by the negative active material in the negative film layer are sufficient to accommodate all lithium ions intercalated from the lithium metal layer and the positive active material, implement one-time intercalation of lithium ions during lithium supplementation in a process of preparing the secondary battery, and ensure that no lithium plating occurs on the anode electrolyte interface. The measurement unit of $I_2 \times T_2$ is identical to that of the total capacity C3 of the negative electrode plate and the total capacity C4 of the positive electrode plate, and is Ah or mAh, for example.

The lithium supplementing method in the second aspect of embodiments of this application is applicable to supplementing lithium for the secondary battery provided in the first aspect of embodiments of this application.

**Battery Module and Battery Pack**

In some embodiments of this application, the secondary battery according to this application may be assembled into a battery module. The battery module may contain a plurality of secondary batteries, and the specific quantity of the secondary batteries in a battery module may be adjusted according to the application requirements and capacity of the battery module.

FIG. 6 is a schematic diagram of a battery module 4 as an example. As shown in FIG. 6, in the battery module 4, a plurality of secondary batteries 5 may be arranged sequentially along a length direction of the battery module 4. Alternatively, the secondary batteries may be arranged in any other manner. Further, the plurality of secondary batteries 5 may be fixed by a fastener.

Optionally, the battery module 4 may further include a shell that provides an accommodation space. The plurality of secondary batteries 5 are accommodated in the accommodation space.

In some embodiments of this application, the battery module may be further assembled into a battery pack. The quantity of the battery modules contained in a battery pack may be adjusted according to the application requirements and the capacity of the battery pack.

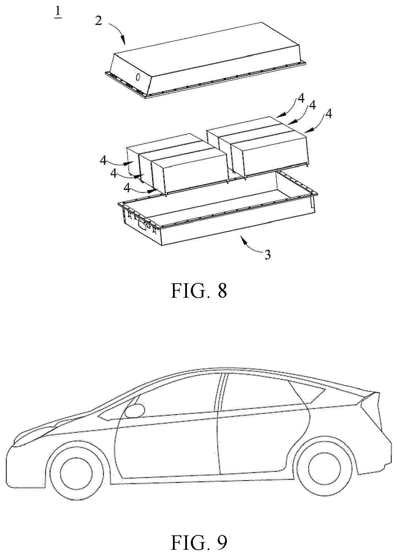

FIG. 7 and FIG. 8 are schematic diagrams of a battery pack 1 as an example. As shown in FIG. 7 and FIG. 8, the battery pack 1 may contain a battery box and a plurality of battery modules 4 disposed in the battery box. The battery box includes an upper box 2 and a lower box 3. The upper box 2 is configured to fit and cover the lower box 3 to form a closed space for accommodating the battery modules 4. The plurality of battery modules 4 may be arranged in the battery box in any manner.

**Electrical Device**

An embodiment of this application further provides an electrical device. The electrical device includes at least one of the secondary battery, the battery module, or the battery pack according to this application. The secondary battery, the battery module, or the battery pack may be used as a power supply of the electrical device, or used as an energy storage unit of the electrical device. The electrical device may be, but without being limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

The secondary battery, the battery module, or the battery pack may be selected for the electrical device according to practical requirements of the electrical device.

FIG. 9 is a schematic diagram of an electrical device as an example. The electrical device may be a battery electric vehicle, a hybrid electric vehicle, a plug-in hybrid electric vehicle, or the like. A battery pack or a battery module may be employed to meet the requirements of the electrical device for a high power and a high energy density.

In another example, the electrical device may be a mobile phone, a tablet computer, a notebook computer, or the like. The electrical device is generally required to be thin and light, and may employ a secondary battery as a power supply.

**Embodiments**

The following embodiments are more detailed descriptions of the content disclosed herein. The embodiments are merely intended as illustrative descriptions because it is apparent that a person skilled in the art may make various modifications and changes to such embodiments within the scope of the content disclosed herein. Unless otherwise specified, all fractions, percentages, and ratios mentioned in the following embodiments are values by weight. All reagents used in the embodiments are commercially available or can be synthesized according to conventional methods, and can be directly put into use without a need of further processing. All the instruments used in the embodiments are commercially available.

**Performance Test**

(1) Testing the cycle performance

Charging a secondary battery at a constant current of 1 C under a 60 °C temperature until the voltage reaches 3.65 V, and then charging the battery at a constant voltage of 3.65 V until the current is less than or equal to 0.05 C so that the secondary battery is in a fully charged state at this time. Recording the charge capacity at this time as a 1st-cycle charge capacity; leaving the battery to stand for 5 minutes, and then discharging the battery at a constant current of 1 C until the voltage reaches 2.5 V, thereby completing one charge-and-discharge cycle. Recording the discharge capacity at this time as a 1st-cycle discharge capacity. Performing charge and discharge tests on the secondary battery for a given number of cycles according to the foregoing method, and recording the discharge capacity at the end of each cycle. A ratio of the discharge capacity of the secondary battery at the end of the given number of cycles to the 1st-cycle discharge capacity represents the capacity retention rate of the secondary battery at the end of the given number of cycles.

(2) Testing the storage performance

Charging the secondary battery at a constant current of 0.33 C under a 25 °C temperature until the voltage reaches 3.65 V, and then charging the battery at a constant voltage of 3 .65 V until the current is less than or equal to 0.05 C. Leaving the secondary battery to stand for 5 minutes, and discharging the secondary battery at a constant current of 0.33 C until the voltage reaches 2.5 V, and recording an actual discharge capacity of the secondary battery as $C_0$. Further, charging the secondary battery at a constant current of 0.33 C under a 25 °C temperature until the voltage reaches 3.65 V, and then charging the battery at a constant voltage of 3.65 V until the current is less than or equal to 0.05 C. At this time, the secondary battery is in a fully charged state. Storing the fully charged secondary battery in a 60 °C thermostat for a period of time and then taking the battery out. Leaving the battery to stand for 5 minutes, and then discharging the secondary battery at a constant current of 0.33 C until the voltage reaches 2.5 V, so as to obtain an after-storage discharge capacity. A ratio of the discharge capacity of the secondary battery stored for a given period of time to the actual discharge capacity $C_0$ of the secondary battery represents the capacity retention rate of the secondary battery stored for a given period of time.

**Comparative Embodiment 1**

**Preparing a negative electrode plate**

Mixing artificial graphite (with a reversible gram capacity of 351 mAh/g) as a negative active substance, acetylene black as a conductive agent, SBR as a binder, and CMC as a thickener at a mass ratio of 96.2: 1.8: 1.6: 0.4 in an appropriate amount of deionized water solvent, stirring well to obtain a negative slurry, applying the negative slurry onto both surfaces of the negative current collector copper foil, and performing drying and cold calendering to obtain a negative electrode plate. The total mass of the negative active materials on both surfaces of the negative electrode plate is 1000 g, and the weight of the negative slurry applied to a single side is 0.150 g/1540.25 mm$^2$ (excluding the solvent).

**Preparing a positive electrode plate**

Mixing lithium iron phosphate (with a reversible gram capacity of 144 mAh/g) as a positive active material, acetylene black as a conductive agent, and PVDF as a binder at a mass ratio of 96: 2: 2 in an appropriate amount of NMP solvent, stirring well to obtain a positive slurry, applying the positive slurry onto both surfaces of the positive current collector aluminum foil, and performing drying and cold calendering to obtain a positive electrode plate. The total mass of the positive active materials on both surfaces of the positive electrode plate is 2152.8 g, and the weight of the positive slurry applied to a single side is 0.323 g/1540.25 mm$^2$ (excluding the solvent).

**Separator**

Using a porous polyethylene film as a separator.

**Preparing an electrolytic solution**

Mixing ethylene carbonate (EC), propylene carbonate (PC), and dimethyl carbonate (DMC) at a mass ratio of 1: 1: 1 in an argon atmosphere glovebox with a water content less than 10 ppm to obtain an organic solvent. Dissolving a fully dried lithium salt $LiPF_6$ in the organic solvent, and stirring well to obtain an electrolytic solution in which the concentration of $LiPF_6$ is 1 mol/L.

**Preparing a secondary battery**

Stacking the prepared positive electrode plate, separator, and negative electrode plate in sequence, and winding the stacked structure to obtain an electrode assembly. Subsequently, placing the electrode assembly into a housing, injecting the foregoing electrolytic solution, sealing the end cap assembly, and performing steps such as standing, chemical formation, and capacity grading to obtain a secondary battery.

$$C1/C2 = (0.150 \text{ g}/1540.25 \text{ mm}^2 \times 96\% \times 351 \text{ mAh/g})/(0.323 \text{ g}/1540.25 \text{ mm}^2 \times 96\% \times 144 \text{ mAh/g}) = 1.13;$$

and

$$C3/C4 = (1000 \text{ g} \times 351 \text{ mAh/g})/(2152.8 \text{ g} \times 144 \text{ mAh/g}) = 1.13.$$

The discharge capacity of the secondary battery at the end of 1500 cycles is 248.0 Ah, and the capacity retention rate is 80.0%.

The discharge capacity of the secondary battery stored for 300 days is 248.0 Ah, and the capacity retention rate is 80.0%.

**Comparative Embodiment 2**

The method for preparing a secondary battery is similar to that in Comparative Embodiment 1, but differs in: the total mass of the negative active materials on both surfaces of the negative electrode plate is 1200 g, and the weight of the negative slurry applied to a single side is 0.180 g/1540.25 mm$^2$ (excluding the solvent); and the total mass of the positive active materials on both surfaces of the positive electrode plate is 2232 g, and the weight of the positive slurry applied to a single side is 0.335 g/1540.25 mm$^2$ (excluding the solvent).

$$C1/C2 = (0.180 \text{ g}/1540.25 \text{ mm}^2 \times 96\% \times 351 \text{ mAh/g})/(0.335 \text{ g}/1540.25 \text{ mm}^2$$
$$\times 96\% \times 144 \text{ mAh/g}) = 1.31;$$

and

$$C3/C4 = (1200 \text{ g} \times 351 \text{ mAh/g})/(2232 \text{ g} \times 144 \text{ mAh/g}) = 1.31.$$

The discharge capacity of the secondary battery at the end of 1500 cycles is 247.5 Ah, and the capacity retention rate is 77.0%.

The discharge capacity of the secondary battery stored for 300 days is 247.5 Ah, and the capacity retention rate is 77.0%.

**Comparative Embodiment 3**

The method for preparing a secondary battery is similar to that in Comparative Embodiment 1, but differs in: the total mass of the negative active materials on both surfaces of the negative electrode plate is 1500 g, and the weight of the negative slurry applied to a single side is 0.225 g/1540.25 mm$^2$ (excluding the solvent); and the total mass of the positive active materials on both surfaces of the positive electrode plate is 2325 g, and the weight of the positive slurry applied to a single side is 0.349 g/1540.25 mm$^2$ (excluding the solvent).

$$C1/C2 = (0.225 \text{ g}/1540.25 \text{ mm}^2 \times 96\% \times 351 \text{ mAh/g})/(0.349 \text{ g}/1540.25 \text{ mm}^2$$
$$\times 96\% \times 144 \text{ mAh/g}) = 1.57;$$

and

$$C3/C4 = (1500 \text{ g} \times 351 \text{ mAh/g})/(2325 \text{ g} \times 144 \text{ mAh/g}) = 1.57.$$

The discharge capacity of the secondary battery at the end of 1500 cycles is 251.1 Ah, and the capacity retention rate is 75.0%.

The discharge capacity of the secondary battery stored for 300 days is 251.1 Ah, and the capacity retention rate is 75.0%.

**Embodiment 1**

The method for preparing a secondary battery is similar to that in Comparative Embodiment 1, but differs in that the process of preparing the secondary battery is adjusted:
Welding a lithium source to the inner side of the bottom plate of the housing; stacking the positive electrode plate, the separator, and the negative electrode plate in sequence, and winding the stacked structure to obtain an electrode assembly. Subsequently, placing the electrode assembly into the housing, injecting the electrolytic solution, sealing the end cap assembly, and performing steps such as standing, chemical formation, and capacity grading to obtain a secondary battery. The end cap assembly contains a first electrode terminal, a second electrode terminal, and a third electrode terminal. The first electrode terminal is electrically connected to the positive electrode plate, the second electrode terminal is electrically connected to the negative electrode plate, and the third electrode terminal is electrically connected to a metal carrier in the lithium source. The metal carrier in the lithium source is copper foil (20 $\mu$m thick). The lithium metal layer is obtained by calendering a lithium foil (2 mm thick) evenly on the copper foil. The ratio of the mass of the lithium metal layer to the total mass of the negative active materials is 0.005: 1.

$$C1/C2 = (0.150 \text{ g}/1540.25 \text{ mm}^2 \times 96\% \times 351 \text{ mAh/g})/(0.323 \text{ g}/1540.25 \text{ mm}^2 \times 96\% \times 144 \text{ mAh/g}) = 1.13;$$

$$C3/C4 = (1000 \text{ g} \times 351 \text{ mAh/g})/(2152.8 \text{ g} \times 144 \text{ mAh/g}) = 1.13;$$

$$C3/(C4 + C5 \times K) = (1000 \text{ g} \times 351 \text{ mAh/g})/(2152.8 \text{ g} \times 144 \text{ mAh/g} + 1000 \text{ g} \times 0.005 \times 3860 \text{ mAh/g} \times 80\%) = 1.08;$$

and

$$(C5 \times K)/C4 \times 100\% = (1000 \text{ g} \times 0.005 \times 3860 \text{ mAh/g} \times 80\%)/(2152.8 \text{ g} \times 144 \text{ mAh/g}) \times 100\% = 5.0\%.$$

The discharge capacity of the secondary battery at the end of 1500 cycles is 248.00 Ah. Subsequently, the third electrode terminal is electrically connected to a negative electrode of a charger-discharger, and the second electrode terminal is electrically connected to a positive electrode of the charger-discharger. In this way, the lithium source discharges electricity to generate lithium ions and supplement the electrode assembly with lithium. The lithium is supplemented at a current of 0.1 A for a duration of 154.4 h. The theoretical capacity C6 of the lithium supplemented this time is 15.44 Ah.

$$C3/(C4 + C6) = (1000 \text{ g} \times 351 \text{ mAh/g})/(2152.8 \text{ g} \times 144 \text{ mAh/g} + 15.44 \times 1000 \text{ mAh}) = 1.08.$$

A test process after completion of the lithium supplementation is: charging the secondary battery at a constant current of 1 C until the voltage reaches 3.65 V, and then charging the battery at a constant voltage of 3.65 V until the current is less than or equal to 0.05 C; and leaving the secondary battery to stand for 5 minutes, and discharging the secondary battery at a constant current of 1 C until the voltage reaches 2.5 V to obtain a discharge capacity of the secondary battery, recorded as 263.44 Ah, so that the capacity retention rate is increased to 85.0%.

The discharge capacity of the secondary battery stored for 300 days is 248.90 Ah. Subsequently, the third electrode terminal is electrically connected to a negative electrode of the charger-discharger, and the second electrode terminal is electrically connected to a positive electrode of the charger-discharger. In this way, the lithium source discharges electricity to generate lithium ions and supplement the electrode assembly with lithium. The lithium is supplemented at a current of 0.1 A for a duration of 154.4 h. The theoretical capacity C6 of the lithium supplemented this time is 15.44 Ah.

$$C3/(C4 + C6) = (1000 \text{ g} \times 351 \text{ mAh/g})/(2152.8 \text{ g} \times 144 \text{ mAh/g} + 15.44 \times 1000 \text{ mAh}) = 1.08.$$

A test process after completion of the lithium supplementation is: charging the secondary battery at a constant current of 0.33 C until the voltage reaches 3.65 V, and then charging the battery at a constant voltage of 3.65 V until the current is less than or equal to 0.05 C; and leaving the secondary battery to stand for 5 minutes, and discharging the secondary battery at a constant current of 0.33 C until the voltage reaches 2.5 V to obtain a discharge capacity of the secondary battery, recorded as 264.34 Ah, so that the capacity retention rate is increased to 85.3%.

**Embodiment 2**

The method for preparing a secondary battery is similar to that in Embodiment 1, but differs in: the ratio of the mass of the lithium metal layer to the total mass of the negative active materials is 0.008: 1.

$$C1/C2 = (0.150 \text{ g}/1540.25 \text{ mm}^2 \times 96\% \times 351 \text{ mAh/g})/(0.323 \text{ g}/1540.25 \text{ mm}^2 \times 96\% \times 144 \text{ mAh/g}) = 1.13;$$

$$C3/C4 = (1000 \text{ g} \times 351 \text{ mAh/g})/(2152.8 \text{ g} \times 144 \text{ mAh/g}) = 1.13;$$

$$C3/(C4 + C5 \times K) = (1000 \text{ g} \times 351 \text{ mAh/g})/(2152.8 \text{ g} \times 144 \text{ mAh/g} + 1000 \text{ g} \times 0.008 \times 3860 \text{ mAh/g} \times 80\%) = 1.05;$$

and

$$(C5 \times K)/C4 \times 100\% = (1000 \text{ g} \times 0.008 \times 3860 \text{ mAh/g} \times 80\%)/(2152.8 \text{ g} \times 144 \text{ mAh/g}) \times 100\% = 8.0\%.$$

The discharge capacity of the secondary battery at the end of 1500 cycles is 248.3 Ah. Subsequently, the third electrode terminal is electrically connected to a negative electrode of a charger-discharger, and the second electrode terminal is electrically connected to a positive electrode of the charger-discharger. In this way, the lithium source discharges electricity to generate lithium ions and supplement the electrode assembly with lithium. The lithium is supplemented at a current of 0.1 A for a duration of 247 h. The theoretical capacity C6 of the lithium supplemented this time is 24.7 Ah.

$$C3/(C4 + C6) = (1000 \text{ g} \times 351 \text{ mAh/g})/(2152.8 \text{ g} \times 144 \text{ mAh/g} + 24.70 \times 1000 \text{ mAh}) = 1.05.$$

A test process after completion of the lithium supplementation is: charging the secondary battery at a constant current of 1 C until the voltage reaches 3.65 V, and then charging the battery at a constant voltage of 3.65 V until the current is less than or equal to 0.05 C; and leaving the secondary battery to stand for 5 minutes, and discharging the secondary battery at a constant current of 1 C until the voltage reaches 2.5 V to obtain a discharge capacity of the secondary battery, recorded as 273.0 Ah, so that the capacity retention rate is increased to 88.1%.

The discharge capacity of the secondary battery stored for 300 days is 247.9 Ah. Subsequently, the third electrode terminal is electrically connected to a negative electrode of the charger-discharger, and the second electrode terminal is electrically connected to a positive electrode of the charger-discharger. In this way, the lithium source discharges electricity to generate lithium ions and supplement the electrode assembly with lithium. The lithium is supplemented at a current of 0.1 A for a duration of 247.0 h. The theoretical capacity C6 of the lithium supplemented this time is 24.70 Ah.

$$C3/(C4 + C6) = (1000 \text{ g} \times 351 \text{ mAh/g})/(2152.8 \text{ g} \times 144 \text{ mAh/g} + 24.70 \times 1000 \text{ mAh}) = 1.05.$$

A test process after completion of the lithium supplementation is: charging the secondary battery at a constant current of 0.33 C until the voltage reaches 3.65 V, and then charging the battery at a constant voltage of 3.65 V until the current is less than or equal to 0.05 C; and leaving the secondary battery to stand for 5 minutes, and discharging the secondary battery at a constant current of 0.33 C until the voltage reaches 2.5 V to obtain a discharge capacity of the secondary battery, recorded as 272.6 Ah, so that the capacity retention rate is increased to 87.9%.

**Embodiment 3**

The method for preparing a secondary battery is similar to that in Embodiment 1, but differs in: the ratio of the mass of the lithium metal layer to the total mass of the negative active materials is 0.015: 1.

$$C1/C2 = (0.150 \text{ g}/1540.25 \text{ mm}^2 \times 96\% \times 351 \text{ mAh/g})/(0.323 \text{ g}/1540.25 \text{ mm}^2 \times 96\% \times 144 \text{ mAh/g}) = 1.13;$$

$$C3/C4 = (1000 \text{ g} \times 351 \text{ mAh/g})/(2152.8 \text{ g} \times 144 \text{ mAh/g}) = 1.13;$$

$$C3/(C4 + C5 \times K) = (1000 \text{ g} \times 351 \text{ mAh/g})/(2152.8 \text{ g} \times 144 \text{ mAh/g} + 1000 \text{ g} \times 0.015 \times 3860 \text{ mAh/g} \times 80\%) = 0.99;$$

and

$$(C5 \times K)/C4 \times 100\% = (1000 \text{ g} \times 0.015 \times 3860 \text{ mAh/g} \times 80\%)/(2152.8 \text{ g} \times 144 \text{ mAh/g}) \times 100\% = 14.9\%.$$

The discharge capacity of the secondary battery at the end of 1500 cycles is 248.90 Ah. Subsequently, the third electrode terminal is electrically connected to a negative electrode of a charger-discharger, and the second electrode terminal is electrically connected to a positive electrode of the charger-discharger. In this way, the lithium source discharges electricity to generate lithium ions and supplement the electrode assembly with lithium. The lithium is supplemented at a current of 0.1 A for a duration of 463.2 h. The theoretical capacity C6 of the lithium supplemented this time is 46.32 Ah.

$$C3/(C4 + C6) = (1000 \text{ g} \times 351 \text{ mAh/g})/(2152.8 \text{ g} \times 144 \text{ mAh/g} + 46.32 \times 1000 \text{ mAh}) = 0.99.$$

A test process after completion of the lithium supplementation is: charging the secondary battery at a constant current of 1 C until the voltage reaches 3.65 V, and then charging the battery at a constant voltage of 3.65 V until the current is less than or equal to 0.05 C; and leaving the secondary battery to stand for 5 minutes, and discharging the secondary battery at a constant current of 1 C until the voltage reaches 2.5 V to obtain a discharge capacity of the secondary battery, recorded as 295.22 Ah, so that the capacity retention rate is increased to 95.2%.

The discharge capacity of the secondary battery stored for 300 days is 248.70 Ah. Subsequently, the third electrode terminal is electrically connected to a negative electrode of the charger-discharger, and the second electrode terminal is electrically connected to a positive electrode of the charger-discharger. In this way, the lithium source discharges electricity to generate lithium ions and supplement the electrode assembly with lithium. The lithium is supplemented at a current of 0.1 A for a duration of 463.2 h. The theoretical capacity C6 of the lithium supplemented this time is 46.32 Ah.

$$C3/(C4 + C6) = (1000 \text{ g} \times 351 \text{ mAh/g})/(2152.8 \text{ g} \times 144 \text{ mAh/g} + 46.32 \times$$

$$1000 \text{ mAh}) = 0.99.$$

A test process after completion of the lithium supplementation is: charging the secondary battery at a constant current of 0.33 C until the voltage reaches 3.65 V, and then charging the battery at a constant voltage of 3.65 V until the current is less than or equal to 0.05 C; and leaving the secondary battery to stand for 5 minutes, and discharging the secondary battery at a constant current of 0.33 C until the voltage reaches 2.5 V to obtain a discharge capacity of the secondary battery, recorded as 295.02 Ah, so that the capacity retention rate is increased to 95.2%.

**Embodiment 4**

The method for preparing a secondary battery is similar to that in Embodiment 1, but differs in: the ratio of the mass of the lithium metal layer to the total mass of the negative active materials is 0.03: 1.

$$C1/C2 = (0.150 \text{ g}/1540.25 \text{ mm}^2 \times 96\% \times 351 \text{ mAh/g})/(0.323 \text{ g}/1540.25 \text{ mm}^2$$

$$\times 96\% \times 144 \text{ mAh/g}) = 1.13;$$

$$C3/C4 = (1000 \text{ g} \times 351 \text{ mAh/g})/(2152.8 \text{ g} \times 144 \text{ mAh/g}) = 1.13;$$

$$C3/(C4 + C5 \times K) = (1000 \text{ g} \times 351 \text{ mAh/g})/(2152.8 \text{ g} \times 144 \text{ mAh/g} + 1000$$

$$\text{g} \times 0.03 \times 3860 \text{ mAh/g} \times 80\%) = 0.87;$$

and

$$(C5 \times K)/C4 \times 100\% = (1000 \text{ g} \times 0.03 \times 3860 \text{ mAh/g} \times 80\%)/(2152.8 \text{ g} \times$$

$$144 \text{ mAh/g}) \times 100\% = 29.9\%.$$

The discharge capacity of the secondary battery at the end of 1500 cycles is 247.5 Ah. Subsequently, the third electrode terminal is electrically connected to a negative electrode of a charger-discharger, and the second electrode terminal is electrically connected to a positive electrode of the charger-discharger. In this way, the lithium source discharges electricity to generate lithium ions and supplement the electrode assembly with lithium. The lithium is supplemented at a current of 0.1 A for a duration of 620 h. The theoretical capacity C6 of the lithium supplemented this time is 62 Ah.

$$C3/(C4 + C6) = (1000 \text{ g} \times 351 \text{ mAh/g})/(2152.8 \text{ g} \times 144 \text{ mAh/g} + 62 \times 1000$$

$$\text{mAh}) = 0.94.$$

A test process after completion of the lithium supplementation is: charging the secondary battery at a constant current of 1 C until the voltage reaches 3.65 V, and then charging the battery at a constant voltage of 3.65 V until the current is less than or equal to 0.05 C; and leaving the secondary battery to stand for 5 minutes, and discharging the secondary battery at a constant current of 1 C until the voltage reaches 2.5 V to obtain a discharge capacity of the secondary battery, recorded as 309.5 Ah, so that the capacity retention rate is increased to 99.8%.

The discharge capacity of the secondary battery stored for 300 days is 248.4 Ah. Subsequently, the third electrode terminal is electrically connected to a negative electrode of the charger-discharger, and the second electrode terminal is electrically connected to a positive electrode of the charger-discharger. In this way, the lithium source discharges electricity to generate lithium ions and supplement the electrode assembly with lithium. The lithium is supplemented at a current of 0.1 A for a duration of 620 h. The theoretical capacity C6 of the lithium supplemented this time

is 62 Ah.

$$C3/(C4 + C6) = (1000 \text{ g} \times 351 \text{ mAh/g})/(2152.8 \text{ g} \times 144 \text{ mAh/g} + 62 \times 1000 \text{ mAh}) = 0.94.$$

A test process after completion of the lithium supplementation is: charging the secondary battery at a constant current of 0.33 C until the voltage reaches 3.65 V, and then charging the battery at a constant voltage of 3.65 V until the current is less than or equal to 0.05 C; and leaving the secondary battery to stand for 5 minutes, and discharging the secondary battery at a constant current of 0.33 C until the voltage reaches 2.5 V to obtain a discharge capacity of the secondary battery, recorded as 310.4 Ah, so that the capacity retention rate is increased to 100.1%.

**Embodiment 5**

The method for preparing a secondary battery is similar to that in Embodiment 1, but differs in: the ratio of the mass of the lithium metal layer to the total mass of the negative active materials is 0.08: 1.

$$C1/C2 = (0.150 \text{ g}/1540.25 \text{ mm}^2 \times 96\% \times 351 \text{ mAh/g})/(0.323 \text{ g}/1540.25 \text{ mm}^2 \times 96\% \times 144 \text{ mAh/g}) = 1.13;$$

$$C3/C4 = (1000 \text{ g} \times 351 \text{ mAh/g})/(2152.8 \text{ g} \times 144 \text{ mAh/g}) = 1.13;$$

$$C3/(C4 + C5 \times K) = (1000 \text{ g} \times 351 \text{ mAh/g})/(2152.8 \text{ g} \times 144 \text{ mAh/g} + 1000 \text{ g} \times 0.08 \times 3860 \text{ mAh/g} \times 80\%) = 0.63;$$

and

$$(C5 \times K)/C4 \times 100\% = (1000 \text{ g} \times 0.08 \times 3860 \text{ mAh/g} \times 80\%)/(2152.8 \text{ g} \times 144 \text{ mAh/g}) \times 100\% = 79.7\%.$$

The discharge capacity of the secondary battery at the end of 1500 cycles is 247.7 Ah. Subsequently, the third electrode terminal is electrically connected to a negative electrode of a charger-discharger, and the second electrode terminal is electrically connected to a positive electrode of the charger-discharger. In this way, the lithium source discharges electricity to generate lithium ions and supplement the electrode assembly with lithium. The lithium is supplemented at a current of 0.1 A for a duration of 620 h. The theoretical capacity C6 of the lithium supplemented this time is 62 Ah.

$$C3/(C4 + C6) = (1000 \text{ g} \times 351 \text{ mAh/g})/(2152.8 \text{ g} \times 144 \text{ mAh/g} + 62 \times 1000 \text{ mAh}) = 0.94.$$

A test process after completion of the lithium supplementation is: charging the secondary battery at a constant current of 1 C until the voltage reaches 3.65 V, and then charging the battery at a constant voltage of 3.65 V until the current is less than or equal to 0.05 C; and leaving the secondary battery to stand for 5 minutes, and discharging the secondary battery at a constant current of 1 C until the voltage reaches 2.5 V to obtain a discharge capacity of the secondary battery, recorded as 309.7 Ah, so that the capacity retention rate is increased to 99.9%.

The discharge capacity of the secondary battery stored for 300 days is 247.8 Ah. Subsequently, the third electrode terminal is electrically connected to a negative electrode of the charger-discharger, and the second electrode terminal is electrically connected to a positive electrode of the charger-discharger. In this way, the lithium source discharges electricity to generate lithium ions and supplement the electrode assembly with lithium. The lithium is supplemented at a current of 0.1 A for a duration of 620 h. The theoretical capacity C6 of the lithium supplemented this time is 62 Ah.

$$C3/(C4 + C6) = (1000 \text{ g} \times 351 \text{ mAh/g})/(2152.8 \text{ g} \times 144 \text{ mAh/g} + 62 \times 1000 \text{ mAh}) = 0.94.$$

A test process after completion of the lithium supplementation is: charging the secondary battery at a constant current of 0.33 C until the voltage reaches 3.65 V, and then charging the battery at a constant voltage of 3.65 V until the current is less than or equal to 0.05 C; and leaving the secondary battery to stand for 5 minutes, and discharging the secondary battery at a constant current of 0.33 C until the voltage reaches 2.5 V to obtain a discharge capacity of the secondary battery, recorded as 309.8 Ah, so that the capacity retention rate is increased to 99.9%.

**Embodiment 6**

The method for preparing a secondary battery is similar to that in Embodiment 1, but differs in: the ratio of the mass of the lithium metal layer to the total mass of the negative active materials is 0.1: 1.

$$C1/C2 = (0.150 \text{ g}/1540.25 \text{ mm}^2 \times 96\% \times 351 \text{ mAh/g})/(0.323 \text{ g}/1540.25 \text{ mm}^2 \times 96\% \times 144 \text{ mAh/g}) = 1.13;$$

$$C3/C4 = (1000 \text{ g} \times 351 \text{ mAh/g})/(2152.8 \text{ g} \times 144 \text{ mAh/g}) = 1.13;$$

$$C3/(C4 + C5 \times K) = (1000 \text{ g} \times 351 \text{ mAh/g})/(2152.8 \text{ g} \times 144 \text{ mAh/g} + 1000 \text{ g} \times 0.1 \times 3860 \text{ mAh/g} \times 80\%) = 0.57;$$

and

$$(C5 \times K)/C4 \times 100\% = (1000 \text{ g} \times 0.1 \times 3860 \text{ mAh/g} \times 80\%)/(2152.8 \text{ g} \times 144 \text{ mAh/g}) \times 100\% = 99.6\%.$$

The discharge capacity of the secondary battery at the end of 1500 cycles is 248.0 Ah. Subsequently, the third electrode terminal is electrically connected to a negative electrode of a charger-discharger, and the second electrode terminal is electrically connected to a positive electrode of the charger-discharger. In this way, the lithium source discharges electricity to generate lithium ions and supplement the electrode assembly with lithium. The lithium is supplemented at a current of 0.1 A for a duration of 620 h. The theoretical capacity C6 of the lithium supplemented this time is 62 Ah.

$$C3/(C4 + C6) = (1000 \text{ g} \times 351 \text{ mAh/g})/(2152.8 \text{ g} \times 144 \text{ mAh/g} + 62 \times 1000 \text{ mAh}) = 0.94.$$

A test process after completion of the lithium supplementation is: charging the secondary battery at a constant current of 1 C until the voltage reaches 3.65 V, and then charging the battery at a constant voltage of 3.65 V until the current is less than or equal to 0.05 C; and leaving the secondary battery to stand for 5 minutes, and discharging the secondary battery at a constant current of 1 C until the voltage reaches 2.5 V to obtain a discharge capacity of the secondary battery, recorded as 310.0 Ah, so that the capacity retention rate is increased to 100.0%.

The discharge capacity of the secondary battery stored for 300 days is 248.5 Ah. Subsequently, the third electrode terminal is electrically connected to a negative electrode of the charger-discharger, and the second electrode terminal is electrically connected to a positive electrode of the charger-discharger. In this way, the lithium source discharges electricity to generate lithium ions and supplement the electrode assembly with lithium. The lithium is supplemented at a current of 0.1 A for a duration of 620 h. The theoretical capacity C6 of the lithium supplemented this time is 62 Ah.

$$C3/(C4 + C6) = (1000 \text{ g} \times 351 \text{ mAh/g})/(2152.8 \text{ g} \times 144 \text{ mAh/g} + 62 \times 1000$$
$$\text{mAh}) = 0.94.$$

A test process after completion of the lithium supplementation is: charging the secondary battery at a constant current of 0.33 C until the voltage reaches 3.65 V, and then charging the battery at a constant voltage of 3.65 V until the current is less than or equal to 0.05 C; and leaving the secondary battery to stand for 5 minutes, and discharging the secondary battery at a constant current of 0.33 C until the voltage reaches 2.5 V to obtain a discharge capacity of the secondary battery, recorded as 310.5 Ah, so that the capacity retention rate is increased to 100.2%.

**Embodiment 7**

The method for preparing a secondary battery is similar to that in Embodiment 1, but differs in the current at which the lithium is supplemented.

The discharge capacity of the secondary battery at the end of 1500 cycles is 248.0 Ah. Subsequently, the third electrode terminal is electrically connected to a negative electrode of a charger-discharger, and the second electrode terminal is electrically connected to a positive electrode of the charger-discharger. In this way, the lithium source discharges electricity to generate lithium ions and supplement the electrode assembly with lithium. The lithium is supplemented at a current of 0.3 A for a duration of 51.5 h. The theoretical capacity C6 of the lithium supplemented this time is 15.44 Ah.

$$C3/(C4 + C6) = (1000 \text{ g} \times 351 \text{ mAh/g})/(2152.8 \text{ g} \times 144 \text{ mAh/g} + 15.44 \times$$
$$1000 \text{ mAh}) = 1.08.$$

A test process after completion of the lithium supplementation is: charging the secondary battery at a constant current of 1 C until the voltage reaches 3.65 V, and then charging the battery at a constant voltage of 3.65 V until the current is less than or equal to 0.05 C; and leaving the secondary battery to stand for 5 minutes, and discharging the secondary battery at a constant current of 1 C until the voltage reaches 2.5 V to obtain a discharge capacity of the secondary battery, recorded as 252.96 Ah, so that the capacity retention rate is increased to 81.6%.

The discharge capacity of the secondary battery stored for 300 days is 248.0 Ah. Subsequently, the third electrode terminal is electrically connected to a negative electrode of the charger-discharger, and the second electrode terminal is electrically connected to a positive electrode of the charger-discharger. In this way, the lithium source discharges electricity to generate lithium ions and supplement the electrode assembly with lithium. The lithium is supplemented at a current of 0.3 A for a duration of 51.5 h. The theoretical capacity C6 of the lithium supplemented this time is 15.44 Ah.

$$C3/(C4 + C6) = (1000 \text{ g} \times 351 \text{ mAh/g})/(2152.8 \text{ g} \times 144 \text{ mAh/g} + 15.44 \times$$
$$1000 \text{ mAh}) = 1.08.$$

A test process after completion of the lithium supplementation is: charging the secondary battery at a constant current of 0.33 C until the voltage reaches 3.65 V, and then charging the battery at a constant voltage of 3.65 V until the current is less than or equal to 0.05 C; and leaving the secondary battery to stand for 5 minutes, and discharging the secondary battery at a constant current of 0.33 C until the voltage reaches 2.5 V to obtain a discharge capacity of the secondary battery, recorded as 252.34 Ah, so that the capacity retention rate is increased to 81.4%.

**Embodiment 8**

The method for preparing a secondary battery is similar to that in Embodiment 1, but differs in: the total mass of the negative active materials on both surfaces of the negative electrode plate is 1200 g, and the weight of the negative slurry applied to a single side is 0.180 g/1540.25 mm$^2$ (excluding the solvent); the total mass of the positive active materials on both surfaces of the positive electrode plate is 2232 g, and the weight of the positive slurry applied to a single side is 0.335 g/1540.25 mm$^2$ (excluding the solvent); and the ratio of the mass of the lithium metal layer to the total mass of the negative active materials is 0.005.

$$C1/C2 = (0.180 \text{ g}/1540.25 \text{ mm}^2 \times 96\% \times 351 \text{ mAh/g})/(0.335 \text{ g}/1540.25 \text{ mm}^2 \times 96\% \times 144 \text{ mAh/g}) = 1.31;$$

$$C3/C4 = (1200 \text{ g} \times 351 \text{ mAh/g})/(2232 \text{ g} \times 144 \text{ mAh/g}) = 1.31;$$

$$C3/(C4 + C5 \times K) = (1200 \text{ g} \times 351 \text{ mAh/g})/(2232 \text{ g} \times 144 \text{ mAh/g} + 1200 \text{ g} \times 0.005 \times 3860 \text{ mAh/g} \times 80\%) = 1.24;$$

and

$$(C5 \times K)/C4 \times 100\% = (1200 \text{ g} \times 0.005 \times 3860 \text{ mAh/g} \times 80\%)/(2232 \text{ g} \times 144 \text{ mAh/g}) \times 100\% = 5.8\%.$$

The discharge capacity of the secondary battery at the end of 1500 cycles is 247.48 Ah. Subsequently, the third electrode terminal is electrically connected to a negative electrode of a charger-discharger, and the second electrode terminal is electrically connected to a positive electrode of the charger-discharger. In this way, the lithium source discharges electricity to generate lithium ions and supplement the electrode assembly with lithium. The lithium is supplemented at a current of 0.1 A for a duration of 185.3 h. The theoretical capacity C6 of the lithium supplemented this time is 18.53 Ah.

$$C3/(C4 + C6) = (1200 \text{ g} \times 351 \text{ mAh/g})/(2232 \text{ g} \times 144 \text{ mAh/g} + 18.53 \times 1000 \text{ mAh}) = 1.24.$$

A test process after completion of the lithium supplementation is: charging the secondary battery at a constant current of 1 C until the voltage reaches 3.65 V, and then charging the battery at a constant voltage of 3.65 V until the current is less than or equal to 0.05 C; and leaving the secondary battery to stand for 5 minutes, and discharging the secondary battery at a constant current of 1 C until the voltage reaches 2.5 V to obtain a discharge capacity of the secondary battery, recorded as 266.01 Ah, so that the capacity retention rate is increased to 82.8%.

The discharge capacity of the secondary battery stored for 300 days is 247.48 Ah. Subsequently, the third electrode terminal is electrically connected to a negative electrode of the charger-discharger, and the second electrode terminal is electrically connected to a positive electrode of the charger-discharger. In this way, the lithium source discharges electricity to generate lithium ions and supplement the electrode assembly with lithium. The lithium is supplemented at a current of 0.1 A for a duration of 185.3 h. The theoretical capacity C6 of the lithium supplemented this time is 18.53 Ah.

$$C3/(C4 + C6) = (1200 \text{ g} \times 351 \text{ mAh/g})/(2232 \text{ g} \times 144 \text{ mAh/g} + 18.53 \times 1000 \text{ mAh}) = 1.24.$$

A test process after completion of the lithium supplementation is: charging the secondary battery at a constant current of 0.33 C until the voltage reaches 3.65 V, and then charging the battery at a constant voltage of 3.65 V until the current is less than or equal to 0.05 C; and leaving the secondary battery to stand for 5 minutes, and discharging the secondary battery at a constant current of 0.33 C until the voltage reaches 2.5 V to obtain a discharge capacity of the secondary battery, recorded as 266.01 Ah, so that the capacity retention rate is increased to 82.8%.

**Embodiment 9**

The method for preparing a secondary battery is similar to that in Embodiment 8, but differs in: the ratio of the mass of the lithium metal layer to the total mass of the negative active materials is 0.008: 1.

$$C1/C2 = (0.180 \text{ g}/1540.25 \text{ mm}^2 \times 96\% \times 351 \text{ mAh/g})/(0.335 \text{ g}/1540.25 \text{ mm}^2 \times 96\% \times 144 \text{ mAh/g}) = 1.31;$$

$$C3/C4 = (1200 \text{ g} \times 351 \text{ mAh/g})/(2232 \text{ g} \times 144 \text{ mAh/g}) = 1.31;$$

$$C3/(C4 + C5 \times K) = (1200 \text{ g} \times 351 \text{ mAh/g})/(2232 \text{ g} \times 144 \text{ mAh/g} + 1200 \text{ g} \times 0.008 \times 3860 \text{ mAh/g} \times 80\%) = 1.20;$$

and

$$(C5 \times K)/C4 \times 100\% = (1200 \text{ g} \times 0.008 \times 3860 \text{ mAh/g} \times 80\%)/(2232 \text{ g} \times 144 \text{ mAh/g}) \times 100\% = 9.2\%.$$

The discharge capacity of the secondary battery at the end of 1500 cycles is 247.2 Ah. Subsequently, the third electrode terminal is electrically connected to a negative electrode of a charger-discharger, and the second electrode terminal is electrically connected to a positive electrode of the charger-discharger. In this way, the lithium source discharges electricity to generate lithium ions and supplement the electrode assembly with lithium. The lithium is supplemented at a current of 0.1 A for a duration of 296.4 h. The theoretical capacity C6 of the lithium supplemented this time is 29.64 Ah.

$$C3/(C4 + C6) = (1200 \text{ g} \times 351 \text{ mAh/g})/(2232 \text{ g} \times 144 \text{ mAh/g} + 29.64 \times 1000 \text{ mAh}) = 1.20.$$

A test process after completion of the lithium supplementation is: charging the secondary battery at a constant current of 1 C until the voltage reaches 3.65 V, and then charging the battery at a constant voltage of 3.65 V until the current is less than or equal to 0.05 C; and leaving the secondary battery to stand for 5 minutes, and discharging the secondary battery at a constant current of 1 C until the voltage reaches 2.5 V to obtain a discharge capacity of the secondary battery, recorded as 276.84 Ah, so that the capacity retention rate is increased to 86.1%.

The discharge capacity of the secondary battery stored for 300 days is 246.9 Ah. Subsequently, the third electrode terminal is electrically connected to a negative electrode of the charger-discharger, and the second electrode terminal is electrically connected to a positive electrode of the charger-discharger. In this way, the lithium source discharges electricity to generate lithium ions and supplement the electrode assembly with lithium. The lithium is supplemented at a current of 0.1 A for a duration of 296.4 h. The theoretical capacity C6 of the lithium supplemented this time is 29.64 Ah.

$$C3/(C4 + C6) = (1200 \text{ g} \times 351 \text{ mAh/g})/(2232 \text{ g} \times 144 \text{ mAh/g} + 29.64 \times 1000 \text{ mAh}) = 1.20.$$

A test process after completion of the lithium supplementation is: charging the secondary battery at a constant current of 0.33 C until the voltage reaches 3.65 V, and then charging the battery at a constant voltage of 3.65 V until the current is less than or equal to 0.05 C; and leaving the secondary battery to stand for 5 minutes, and discharging the secondary battery at a constant current of 0.33 C until the voltage reaches 2.5 Vto obtain a discharge capacity of the secondary battery, recorded as 276.54 Ah, so that the capacity retention rate is increased to 86.0%.

**Embodiment 10**

The method for preparing a secondary battery is similar to that in Embodiment 8, but differs in: the ratio of the mass of the lithium metal layer to the total mass of the negative active materials is 0.015: 1.

$$C1/C2 = (0.180 \text{ g}/1540.25 \text{ mm}^2 \times 96\% \times 351 \text{ mAh/g})/(0.335 \text{ g}/1540.25 \text{ mm}^2 \times 96\% \times 144 \text{ mAh/g}) = 1.31;$$

$$C3/C4 = (1200 \text{ g} \times 351 \text{ mAh/g})/(2232 \text{ g} \times 144 \text{ mAh/g}) = 1.31;$$

$$C3/(C4 + C5 \times K) = (1200 \text{ g} \times 351 \text{ mAh/g})/(2232 \text{ g} \times 144 \text{ mAh/g} + 1200 \text{ g} \times 0.015 \times 3860 \text{ mAh/g} \times 80\%) = 1.12;$$

and

$$(C5 \times K)/C4 \times 100\% = (1200 \text{ g} \times 0.015 \times 3860 \text{ mAh/g} \times 80\%)/(2232 \text{ g} \times 144 \text{ mAh/g}) \times 100\% = 17.3\%.$$

The discharge capacity of the secondary battery at the end of 1500 cycles is 247.5 Ah. Subsequently, the third electrode terminal is electrically connected to a negative electrode of a charger-discharger, and the second electrode terminal is electrically connected to a positive electrode of the charger-discharger. In this way, the lithium source discharges electricity to generate lithium ions and supplement the electrode assembly with lithium. The lithium is supplemented at a current of 0.1 A for a duration of 555.8 h. The theoretical capacity C6 of the lithium supplemented this time is 55.58 Ah.

$$C3/(C4 + C6) = (1200 \text{ g} \times 351 \text{ mAh/g})/(2232 \text{ g} \times 144 \text{ mAh/g} + 55.58 \times 1000 \text{ mAh}) = 1.12.$$

A test process after completion of the lithium supplementation is: charging the secondary battery at a constant current of 1 C until the voltage reaches 3.65 V, and then charging the battery at a constant voltage of 3.65 V until the current is less than or equal to 0.05 C; and leaving the secondary battery to stand for 5 minutes, and discharging the secondary battery at a constant current of 1 C until the voltage reaches 2.5 V to obtain a discharge capacity of the secondary battery, recorded as 303.08 Ah, so that the capacity retention rate is increased to 94.3%.

The discharge capacity of the secondary battery stored for 300 days is 247.3 Ah. Subsequently, the third electrode terminal is electrically connected to a negative electrode of the charger-discharger, and the second electrode terminal is electrically connected to a positive electrode of the charger-discharger. In this way, the lithium source discharges electricity to generate lithium ions and supplement the electrode assembly with lithium. The lithium is supplemented at a current of 0.1 A for a duration of 555.8 h. The theoretical capacity C6 of the lithium supplemented this time is 55.58 Ah.

$$C3/(C4 + C6) = (1200 \text{ g} \times 351 \text{ mAh/g})/(2232 \text{ g} \times 144 \text{ mAh/g} + 55.58 \times 1000 \text{ mAh}) = 1.12.$$

A test process after completion of the lithium supplementation is: charging the secondary battery at a constant current of 0.33 C until the voltage reaches 3.65 V, and then charging the battery at a constant voltage of 3.65 V until the current is less than or equal to 0.05 C; and leaving the secondary battery to stand for 5 minutes, and discharging the secondary battery at a constant current of 0.33 C until the voltage reaches 2.5 V to obtain a discharge capacity of the secondary battery, recorded as 302.88 Ah, so that the capacity retention rate is increased to 94.2%.

**Embodiment 11**

The method for preparing a secondary battery is similar to that in Embodiment 1, but differs in: the total mass of the negative active materials on both surfaces of the negative electrode plate is 1500 g, and the weight of the negative slurry applied to a single side is 0.225 g/1540.25 $mm^2$ (excluding the solvent); the total mass of the positive active materials on both surfaces of the positive electrode plate is 2325 g, and the weight of the positive slurry applied to a single side is 0.349 g/1540.25 $mm^2$ (excluding the solvent); and the ratio of the mass of the lithium metal layer to the total mass of the negative active materials is 0.005: 1.

$$C1/C2 = (0.225 \text{ g}/1540.25 \text{ mm}^2 \times 96\% \times 351 \text{ mAh/g})/(0.349 \text{ g}/1540.25 \text{ mm}^2 \times 96\% \times 144 \text{ mAh/g}) = 1.57;$$

$$C3/C4 = (1500 \text{ g} \times 351 \text{ mAh/g})/(2325 \text{ g} \times 144 \text{ mAh/g}) = 1.57;$$

$$C3/(C4 + C5 \times K) = (1500 \text{ g} \times 351 \text{ mAh/g})/(2325 \text{ g} \times 144 \text{ mAh/g} + 1500 \text{ g} \times 0.005 \times 3860 \text{ mAh/g} \times 80\%) = 1.47;$$

and

$$(C5 \times K)/C4 \times 100\% = (1500 \text{ g} \times 0.005 \times 3860 \text{ mAh/g} \times 80\%)/(2325 \text{ g} \times 144 \text{ mAh/g}) \times 100\% = 6.9\%.$$

The discharge capacity of the secondary battery at the end of 1500 cycles is 251.0 Ah. Subsequently, the third electrode terminal is electrically connected to a negative electrode of a charger-discharger, and the second electrode terminal is electrically connected to a positive electrode of the charger-discharger. In this way, the lithium source discharges electricity to generate lithium ions and supplement the electrode assembly with lithium. The lithium is supplemented at a current of 0.1 A for a duration of 231.6 h. The theoretical capacity C6 of the lithium supplemented this time is 23.16 Ah.

$$C3/(C4 + C6) = (1500 \text{ g} \times 351 \text{ mAh/g})/(2325 \text{ g} \times 144 \text{ mAh/g} + 23.16 \times 1000 \text{ mAh}) = 1.47.$$

A test process after completion of the lithium supplementation is: charging the secondary battery at a constant current of 1 C until the voltage reaches 3.65 V, and then charging the battery at a constant voltage of 3.65 V until the current is less than or equal to 0.05 C; and leaving the secondary battery to stand for 5 minutes, and discharging the secondary battery at a constant current of 1 C until the voltage reaches 2.5 V to obtain a discharge capacity of the secondary battery, recorded as 274.16 Ah, so that the capacity retention rate is increased to 81.9%.

The discharge capacity of the secondary battery stored for 300 days is 251.1 Ah. Subsequently, the third electrode terminal is electrically connected to a negative electrode of the charger-discharger, and the second electrode terminal is electrically connected to a positive electrode of the charger-discharger. In this way, the lithium source discharges electricity to generate lithium ions and supplement the electrode assembly with lithium. The lithium is supplemented at a current of 0.1 A for a duration of 231.6 h. The theoretical capacity C6 of the lithium supplemented this time is 23.16 Ah.

$$C3/(C4 + C6) = (1500 \text{ g} \times 351 \text{ mAh/g})/(2325 \text{ g} \times 144 \text{ mAh/g} + 23.16 \times 1000 \text{ mAh}) = 1.47.$$

A test process after completion of the lithium supplementation is: charging the secondary battery at a constant current of 0.33 C until the voltage reaches 3.65 V, and then charging the battery at a constant voltage of 3.65 V until the current is less than or equal to 0.05 C; and leaving the secondary battery to stand for 5 minutes, and discharging the secondary battery at a constant current of 0.33 C until the voltage reaches 2.5 V to obtain a discharge capacity of the secondary battery, recorded as 274.26 Ah, so that the capacity retention rate is increased to 81.9%.

**Embodiment 12**

The method for preparing a secondary battery is similar to that in Embodiment 11, but differs in: the ratio of the mass of the lithium metal layer to the total mass of the negative active materials is 0.008: 1.

$$C1/C2 = (0.225 \text{ g}/1540.25 \text{ mm}^2 \times 96\% \times 351 \text{ mAh/g})/(0.349 \text{ g}/1540.25 \text{ mm}^2 \times 96\% \times 144 \text{ mAh/g}) = 1.57;$$

$$C3/C4 = (1500 \text{ g} \times 351 \text{ mAh/g})/(2325 \text{ g} \times 144 \text{ mAh/g}) = 1.57;$$

$$C3/(C4 + C5 \times K) = (1500 \text{ g} \times 351 \text{ mAh/g})/(2325 \text{ g} \times 144 \text{ mAh/g} + 1500 \text{ g} \times 0.008 \times 3860 \text{ mAh/g} \times 80\%) = 1.42;$$

and

$$(C5 \times K)/C4 \times 100\% = (1500 \text{ g} \times 0.008 \times 3860 \text{ mAh/g} \times 80\%)/(2325 \text{ g} \times 144 \text{ mAh/g}) \times 100\% = 11.1\%.$$

The discharge capacity of the secondary battery at the end of 1500 cycles is 251.1 Ah. Subsequently, the third electrode terminal is electrically connected to a negative electrode of a charger-discharger, and the second electrode terminal is electrically connected to a positive electrode of the charger-discharger. In this way, the lithium source discharges electricity to generate lithium ions and supplement the electrode assembly with lithium. The lithium is supplemented at a current of 0.1 A for a duration of 370.6 h. The theoretical capacity C6 of the lithium supplemented this time is 37.06 Ah.

$$C3/(C4 + C6) = (1500 \text{ g} \times 351 \text{ mAh/g})/(2325 \text{ g} \times 144 \text{ mAh/g} + 37.06 \times 1000 \text{ mAh}) = 1.42.$$

A test process after completion of the lithium supplementation is: charging the secondary battery at a constant current of 1 C until the voltage reaches 3.65 V, and then charging the battery at a constant voltage of 3.65 V until the current is less than or equal to 0.05 C; and leaving the secondary battery to stand for 5 minutes, and discharging the secondary battery at a constant current of 1 C until the voltage reaches 2.5 V to obtain a discharge capacity of the secondary battery, recorded as 288.16 Ah, so that the capacity retention rate is increased to 86.1%.

The discharge capacity of the secondary battery stored for 300 days is 250.4 Ah. Subsequently, the third electrode terminal is electrically connected to a negative electrode of the charger-discharger, and the second electrode terminal is electrically connected to a positive electrode of the charger-discharger. In this way, the lithium source discharges electricity to generate lithium ions and supplement the electrode assembly with lithium. The lithium is supplemented at a current of 0.1 A for a duration of 370.6 h. The theoretical capacity C6 of the lithium supplemented this time is 37.06 Ah.

$$C3/(C4 + C6) = (1500 \text{ g} \times 351 \text{ mAh/g})/(2325 \text{ g} \times 144 \text{ mAh/g} + 37.06 \times 1000 \text{ mAh}) = 1.42.$$

A test process after completion of the lithium supplementation is: charging the secondary battery at a constant current of 0.33 C until the voltage reaches 3.65 V, and then charging the battery at a constant voltage of 3.65 V until the current is less than or equal to 0.05 C; and leaving the secondary battery to stand for 5 minutes, and discharging the secondary battery at a constant current of 0.33 C until the voltage reaches 2.5 V to obtain a discharge capacity of the secondary battery, recorded as 287.46 Ah, so that the capacity retention rate is increased to 85.9%.

**Embodiment 13**

The method for preparing a secondary battery is similar to that in Embodiment 11, but differs in: the ratio of the mass of the lithium metal layer to the total mass of the negative active materials is 0.015: 1.

$$C1/C2 = (0.225 \text{ g}/1540.25 \text{ mm}^2 \times 96\% \times 351 \text{ mAh/g})/(0.349 \text{ g}/1540.25 \text{ mm}^2 \times 96\% \times 144 \text{ mAh/g}) = 1.57;$$

$$C3/C4 = (1500 \text{ g} \times 351 \text{ mAh/g})/(2325 \text{ g} \times 144 \text{ mAh/g}) = 1.57;$$

$$C3/(C4 + C5 \times K) = (1500 \text{ g} \times 351 \text{ mAh/g})/(2325 \text{ g} \times 144 \text{ mAh/g} + 1500 \text{ g} \times 0.015 \times 3860 \text{ mAh/g} \times 80\%) = 1.30;$$

and

$$(C5 \times K)/C4 \times 100\% = (1500 \text{ g} \times 0.015 \times 3860 \text{ mAh/g} \times 80\%)/(2325 \text{ g} \times 144 \text{ mAh/g}) \times 100\% = 20.8\%.$$

The discharge capacity of the secondary battery at the end of 1500 cycles is 251.1 Ah. Subsequently, the third electrode terminal is electrically connected to a negative electrode of a charger-discharger, and the second electrode terminal is electrically connected to a positive electrode of the charger-discharger. In this way, the lithium source discharges electricity to generate lithium ions and supplement the electrode assembly with lithium. The lithium is supplemented at a current of 0.1 A for a duration of 694.8 h. The theoretical capacity C6 of the lithium supplemented this time is 69.48 Ah.

$$C3/(C4 + C6) = (1500 \text{ g} \times 351 \text{ mAh/g})/(2325 \text{ g} \times 144 \text{ mAh/g} + 69.48 \times 1000 \text{ mAh}) = 1.30.$$

A test process after completion of the lithium supplementation is: charging the secondary battery at a constant current of 1 C until the voltage reaches 3.65 V, and then charging the battery at a constant voltage of 3.65 V until the current is less than or equal to 0.05 C; and leaving the secondary battery to stand for 5 minutes, and discharging the secondary battery at a constant current of 1 C until the voltage reaches 2.5 V to obtain a discharge capacity of the secondary battery, recorded as 320.58 Ah, so that the capacity retention rate is increased to 95.8%.

The discharge capacity of the secondary battery stored for 300 days is 251.4 Ah. Subsequently, the third electrode terminal is electrically connected to a negative electrode of the charger-discharger, and the second electrode terminal is electrically connected to a positive electrode of the charger-discharger. In this way, the lithium source discharges electricity to generate lithium ions and supplement the electrode assembly with lithium. The lithium is supplemented at a current of 0.1 A for a duration of 694.8 h. The theoretical capacity C6 of the lithium supplemented this time is 69.48 Ah.

$$C3/(C4 + C6) = (1500 \text{ g} \times 351 \text{ mAh/g})/(2325 \text{ g} \times 144 \text{ mAh/g} + 69.48 \times 1000 \text{ mAh}) = 1.30.$$

A test process after completion of the lithium supplementation is: charging the secondary battery at a constant current of 0.33 C until the voltage reaches 3.65 V, and then charging the battery at a constant voltage of 3.65 V until the current is less than or equal to 0.05 C; and leaving the secondary battery to stand for 5 minutes, and discharging the secondary battery at a constant current of 0.33 C until the voltage reaches 2.5 V to obtain a discharge capacity of the secondary battery, recorded as 320.88 Ah, so that the capacity retention rate is increased to 95.8%.

**Embodiment 14**

The method for preparing a secondary battery is similar to that in Embodiment 13, but differs in: the lithium source is welded to the inner side of a side plate of the housing.

$$C1/C2 = (0.225 \text{ g}/1540.25 \text{ mm}^2 \times 96\% \times 351 \text{ mAh/g})/(0.349 \text{ g}/1540.25 \text{ mm}^2 \times 96\% \times 144 \text{ mAh/g}) = 1.57;$$

$$C3/C4 = (1500 \text{ g} \times 351 \text{ mAh/g})/(2325 \text{ g} \times 144 \text{ mAh/g}) = 1.57;$$

$$C3/(C4 + C5 \times K) = (1500 \text{ g} \times 351 \text{ mAh/g})/(2325 \text{ g} \times 144 \text{ mAh/g} + 1500 \text{ g} \times 0.015 \times 3860 \text{ mAh/g} \times 80\%) = 1.30;$$

and

$$(C5 \times K)/C4 \times 100\% = (1500 \text{ g} \times 0.015 \times 3860 \text{ mAh/g} \times 80\%)/(2325 \text{ g} \times 144 \text{ mAh/g}) \times 100\% = 20.8\%.$$

The discharge capacity of the secondary battery at the end of 1500 cycles is 251.1 Ah. Subsequently, the third electrode terminal is electrically connected to a negative electrode of a charger-discharger, and the second electrode terminal is electrically connected to a positive electrode of the charger-discharger. In this way, the lithium source discharges electricity to generate lithium ions and supplement the electrode assembly with lithium. The lithium is supplemented at a current of 0.1 A for a duration of 694.8 h. The theoretical capacity C6 of the lithium supplemented this time is 69.48 Ah.

$$C3/(C4 + C6) = (1500 \text{ g} \times 351 \text{ mAh/g})/(2325 \text{ g} \times 144 \text{ mAh/g} + 69.48 \times 1000 \text{ mAh}) = 1.30.$$

A test process after completion of the lithium supplementation is: charging the secondary battery at a constant current of 1 C until the voltage reaches 3.65 V, and then charging the battery at a constant voltage of 3.65 V until the current is less than or equal to 0.05 C; and leaving the secondary battery to stand for 5 minutes, and discharging the secondary battery at a constant current of 1 C until the voltage reaches 2.5 V to obtain a discharge capacity of the secondary battery, recorded as 312.04 Ah, so that the capacity retention rate is increased to 93.2%.

The discharge capacity of the secondary battery stored for 300 days is 251.8 Ah. Subsequently, the third electrode terminal is electrically connected to a negative electrode of the charger-discharger, and the second electrode terminal is electrically connected to a positive electrode of the charger-discharger. In this way, the lithium source discharges electricity to generate lithium ions and supplement the electrode assembly with lithium. The lithium is supplemented at a current of 0.1 A for a duration of 694.8 h. The theoretical capacity C6 of the lithium supplemented this time is 694.8 Ah.

$$C3/(C4 + C6) = (1500 \text{ g} \times 351 \text{ mAh/g})/(2325 \text{ g} \times 144 \text{ mAh/g} + 69.48 \times 1000 \text{ mAh}) = 1.30.$$

A test process after completion of the lithium supplementation is: charging the secondary battery at a constant current of 0.33 C until the voltage reaches 3.65 V, and then charging the battery at a constant voltage of 3.65 V until the current is less than or equal to 0.05 C; and leaving the secondary battery to stand for 5 minutes, and discharging the secondary battery at a constant current of 0.33 C until the voltage reaches 2.5 V to obtain a discharge capacity of the secondary battery, recorded as 311.44 Ah, so that the capacity retention rate is increased to 93.0%.

**Embodiment 15**

The method for preparing a secondary battery is similar to that in Embodiment 1, but differs in: the timing of supplementing lithium is different, and the ratio of the mass of the lithium metal layer to the total mass of the negative active materials is 0.0024: 1.

After completion of chemical formation of the secondary battery, the third electrode terminal is electrically connected to a negative electrode of a charger-discharger, and the second electrode terminal is electrically connected to a positive electrode of the charger-discharger. In this way, the lithium source discharges electricity to generate lithium ions and supplement the electrode assembly with lithium. The lithium is supplemented at a current of 0.1 A for a duration of 74.1 h. The theoretical capacity C6 of the lithium supplemented this time is 7.41 Ah.

$$C3/(C4 + C6) = (1000 \text{ g} \times 351 \text{ mAh/g})/(2152.8 \text{ g} \times 144 \text{ mAh/g} + 7.41 \times 1000 \text{ mAh}) = 1.11;$$

$$C1/C2 = (0.150 \text{ g}/1540.25 \text{ mm}^2 \times 96\% \times 351 \text{ mAh/g})/(0.323 \text{ g}/1540.25 \text{ mm}^2 \times 96\% \times 144 \text{ mAh/g}) = 1.13;$$

$$C3/C4 = (1000 \text{ g} \times 351 \text{ mAh/g})/(2152.8 \text{ g} \times 144 \text{ mAh/g}) = 1.13;$$

$$C3/(C4 + C5 \times K) = (1000 \text{ g} \times 351 \text{ mAh/g})/(2152.8 \text{ g} \times 144 \text{ mAh/g} + 1000 \text{ g} \times 0.0024 \times 3860 \text{ mAh/g} \times 80\%) = 1.11;$$

and

$$(C5 \times K)/C4 \times 100\% = (1000 \text{ g} \times 0.0024 \times 3860 \text{ mAh/g} \times 80\%)/(2152.8 \text{ g}$$

$$\times 144 \text{ mAh/g}) \times 100\% = 2.4\%.$$

The capacity retention rate of the secondary battery at the end of 1500 cycles is 81.7%, and the capacity retention rate of the secondary battery stored for 300 days is 81.6%.

**Table 1 Performance test results of secondary batteries prepared in Comparative Embodiments 1 to 3**

| Serial number | 1500th-cycle capacity retention rate | Capacity retention rate of battery stored for 300 days |
|---|---|---|
| Comparative Embodiment 1 | 80.0% | 80.0% |
| Comparative Embodiment 2 | 77.0% | 77.0% |
| Comparative Embodiment 3 | 75.0% | 75.0% |

**Table 2 Lithium supplementing parameters and test results of secondary batteries prepared in Embodiments 1 to 14 and supplemented at end of 1500 cycles**

| Serial number | Lithium supplementing current (A) | Lithium supplementing duration (h) | Theoretical capacity C6 of lithium supplemented (Ah) | Discharge capacity of to-be-supplemented battery (Ah) | Discharge capacity of lithium-supplemented battery (Ah) | Actual discharge capacity difference between to-be-supplemented battery and lithium-supplemented battery (Ah) | Capacity retention rate of lithium-supplemented battery |
|---|---|---|---|---|---|---|---|
| Embodiment 1 | 0.1 | 154.4 | 15.44 | 248.00 | 263.44 | 15.44 | 85.0% |
| Embodiment 2 | 0.1 | 247.0 | 24.70 | 248.30 | 273.00 | 24.70 | 88.1% |
| Embodiment 3 | 0.1 | 463.2 | 46.32 | 248.90 | 295.22 | 46.32 | 95.2% |
| Embodiment 4 | 0.1 | 620.0 | 62.00 | 247.50 | 309.50 | 62.00 | 99.8% |
| Embodiment 5 | 0.1 | 620.0 | 62.00 | 247.70 | 309.70 | 62.00 | 99.9% |
| Embodiment 6 | 0.1 | 620.0 | 62.00 | 248.00 | 310.00 | 62.00 | 100.0% |
| Embodiment 7 | 0.3 | 51.5 | 15.44 | 248.00 | 252.96 | 4.96 | 81.6% |
| Embodiment 8 | 0.1 | 185.3 | 18.53 | 247.48 | 266.01 | 18.53 | 82.8% |
| Embodiment 9 | 0.1 | 296.4 | 29.64 | 247.20 | 276.84 | 29.64 | 86.1% |
| Embodiment 10 | 0.1 | 555.8 | 55.58 | 247.50 | 303.08 | 55.58 | 94.3% |
| Embodiment 11 | 0.1 | 231.6 | 23.16 | 251.00 | 274.16 | 23.16 | 81.9% |
| Embodiment 12 | 0.1 | 370.6 | 37.06 | 251.10 | 288.16 | 37.06 | 86.1% |
| Embodiment 13 | 0.1 | 694.8 | 69.48 | 251.10 | 320.58 | 69.48 | 95.8% |

| Serial number | Lithium supplementing current (A) | Lithium supplementing duration (h) | Theoretical capacity C6 of lithium supplemented (Ah) | Discharge capacity of to-be-supplemented battery (Ah) | Discharge capacity of lithium-supplemented battery (Ah) | Actual discharge capacity difference between to-be-supplemented battery and lithium-supplemented battery (Ah) | Capacity retention rate of lithium-supplemented battery |
|---|---|---|---|---|---|---|---|
| Embodiment 14 | 0.1 | 694.8 | 69.48 | 251.10 | 312.04 | 60.94 | 93.2% |

**Table 3 Lithium supplementing parameters and test results of secondary batteries prepared in Embodiments 1 to 14 and supplemented after 300 days of storage**

| Serial number | Lithium supplementing current (A) | Lithium supplementing duration (h) | Theoretical capacity C6 of lithium supplemented (Ah) | Discharge capacity of to-be-supplemented battery (Ah) | Discharge capacity of lithium-supplemented battery (Ah) | Actual discharge capacity difference between to-be-supplemented battery and lithium-supplemented battery (Ah) | Capacity retention rate of lithium-supplemented battery |
|---|---|---|---|---|---|---|---|
| Embodiment 1 | 0.1 | 154.4 | 15.44 | 248.90 | 264.34 | 15.44 | 85.3% |
| Embodiment 2 | 0.1 | 247.0 | 24.70 | 247.90 | 272.60 | 24.70 | 87.9% |
| Embodiment 3 | 0.1 | 463.2 | 46.32 | 248.70 | 295.02 | 46.32 | 95.2% |
| Embodiment 4 | 0.1 | 620.0 | 62.00 | 248.40 | 310.40 | 62.00 | 100.1% |
| Embodiment 5 | 0.1 | 620.0 | 62.00 | 247.80 | 309.80 | 62.00 | 99.9% |
| Embodiment 6 | 0.1 | 620.0 | 62.00 | 248.50 | 310.50 | 62.00 | 100.2% |
| Embodiment 7 | 0.3 | 51.5 | 15.44 | 248.00 | 252.34 | 4.34 | 81.4% |
| Embodiment 8 | 0.1 | 185.3 | 18.53 | 247.48 | 266.01 | 18.53 | 82.8% |
| Embodiment 9 | 0.1 | 296.4 | 29.64 | 246.90 | 276.54 | 29.64 | 86.0% |
| Embodiment 10 | 0.1 | 555.8 | 55.58 | 247.30 | 302.88 | 55.58 | 94.2% |
| Embodiment 11 | 0.1 | 231.6 | 23.16 | 251.10 | 274.26 | 23.16 | 81.9% |
| Embodiment 12 | 0.1 | 370.6 | 37.06 | 250.40 | 287.46 | 37.06 | 85.9% |
| Embodiment 13 | 0.1 | 694.8 | 69.48 | 251.40 | 320.88 | 69.48 | 95.8% |

| Serial number | Lithium supplementing current (A) | Lithium supplementing duration (h) | Theoretical capacity C6 of lithium supplemented (Ah) | Discharge capacity of to-be-supplemented battery (Ah) | Discharge capacity of lithium-supplemented battery (Ah) | Actual discharge capacity difference between to-be-supplemented battery and lithium-supplemented battery (Ah) | Capacity retention rate of lithium-supplemented battery |
|---|---|---|---|---|---|---|---|
| Embodiment 14 | 0.1 | 694.8 | 69.48 | 251.80 | 311.44 | 59.64 | 93.0% |

EP 4 207 415 A1

**Table 4 Lithium supplementing parameters and test results of secondary battery prepared in Embodiment 15 and supplemented after chemical formation**

| Serial number | Lithium supplementing current (A) | Lithium supplementing duration (h) | Theoretical capacity C6 of lithium supplemented (Ah) | 1500th-cycle capacity retention rate | Capacity retention rate of battery stored for 300 days |
|---|---|---|---|---|---|
| Embodiment 15 | 0.1 | 74.1 | 7.41 | 81.7% | 81.6% |

As can be seen from the test results in Table 1 to Table 4, the structure of the secondary battery according to this application enables control of the supplementing speed and the supplement amount of lithium, thereby avoiding excessive supplement of lithium. Further, this application enables supplementation of lithium as actually required during preparation, cycling, storage, and the like of the secondary battery, thereby significantly enhancing the cycle performance and storage performance of the secondary battery according to this application.

What is described above is merely specific embodiments of this application, but is not intended to limit the protection scope of this application. Various equivalent modifications and replacements conceivable by any person skilled in the art without departing from the technical scope disclosed herein still fall within the protection scope of this application. Therefore, the protection scope of this application is subject to the protection scope of the claims.

**Claims**

1.   A secondary battery, comprising:

a housing, on which an opening is made;
an end cap assembly, configured to close the opening of the housing; and
an electrode assembly, packaged in the housing, and comprising a positive electrode plate and a negative electrode plate,
wherein,
the end cap assembly contains a first electrode terminal, a second electrode terminal, and a third electrode terminal;
the electrode assembly is electrically connected to the first electrode terminal and the second electrode terminal;
the secondary battery further comprises a lithium source, the lithium source is disposed on an inner side of the housing and electrically connected to the third electrode terminal, and the lithium source comprises a lithium metal layer and a metal carrier located between the lithium metal layer and the housing and configured to support the lithium metal layer; and
the third electrode terminal is electrically connected to the first electrode terminal or the second electrode terminal controllably by an external power supply, so that the lithium source supplements the electrode assembly with lithium.

2.   The secondary battery according to claim 1, wherein the housing comprises a bottom plate and side plates, the lithium source is disposed on an inner side of the bottom plate and/or an inner side of a side plate, and optionally, the lithium source is disposed on the inner side of the bottom plate.

3.   The secondary battery according to claim 1 or 2, wherein the metal carrier is made of a material selected from copper, copper alloy, nickel, nickel alloy, titanium, titanium alloy, silver, silver alloy, or stainless steel.

4.   The secondary battery according to any one of claims 1 to 3, wherein the secondary battery further comprises an insulation piece located between the lithium source and the electrode assembly.

5.   The secondary battery according to any one of claims 1 to 4, wherein a total capacity C3 of the negative electrode plate and a total capacity C4 of the positive electrode plate satisfy: C3/C4 is 1.0 to 2.1, and optionally, C3/C4 is 1.0 to 1.3.

6.   The secondary battery according to claim 5, wherein the total capacity C3 of the negative electrode plate, the total capacity C4 of the positive electrode plate, and a theoretical capacity C5 of the lithium metal layer satisfy: $C3/(C4 + C5 \times K) \geq 0.2$, and optionally, $C3/(C4 + C5 \times K)$ is 0.5 to 1.1, wherein K represents a utilization rate of metallic lithium available in the lithium metal layer for compensating for lithium ions.

7. The secondary battery according to claim 6, wherein the total capacity C4 of the positive electrode plate and the theoretical capacity C5 of the lithium metal layer satisfy: $(C5 \times K)/C4 \times 100\% \geq 3\%$, and optionally $(C5 \times K)/C4 \times 100\%$ is 5% to 100%.

8. A method for supplementing a secondary battery with lithium, comprising at least the following steps:

step 1: providing the secondary battery, wherein the secondary battery comprises:

a housing, on which an opening is made;
an end cap assembly, configured to close the opening of the housing, and containing a first electrode terminal, a second electrode terminal, and a third electrode terminal;
an electrode assembly, packaged in the housing and electrically connected to the first electrode terminal and the second electrode terminal; and
a lithium source, disposed on an inner side of the housing and electrically connected to the third electrode terminal, wherein the lithium source comprises a lithium metal layer and a metal carrier located between the lithium metal layer and the housing and configured to support the lithium metal layer; and

step 2: electrically connecting the third electrode terminal to the first electrode terminal or the second electrode terminal by an external power supply, so that the lithium source supplements the electrode assembly with lithium.

9. The method according to claim 8, wherein the secondary battery further comprises an insulation piece located between the lithium source and the electrode assembly.

10. The method according to claim 8 or 9, wherein the housing comprises a bottom plate and side plates, the lithium source is disposed on an inner side of the bottom plate and/or an inner side of a side plate, and optionally, the lithium source is disposed on the inner side of the bottom plate.

11. The method according to any one of claims 8 to 10, wherein

the external power supply is a charger-discharger; and/or
a voltage regulation range of the external power supply is 0 V to 5 V

12. The method according to any one of claims 8 to 11, wherein an energizing current of the external power supply is 0.002 A to 50 A, and optionally 0.005 A to 0.1 A.

13. A battery module, comprising the secondary battery according to any one of claims 1 to 7.

14. A battery pack, comprising the battery module according to claim 13.

15. An electrical device, comprising at least one of the secondary battery according to any one of claims 1 to 7, the battery module according to claim 13, or the battery pack according to claim 14.

**5**

FIG. 1

5

53

52

52

51

FIG. 2

FIG. 3

FIG. 4

EP 4 207 415 A1

FIG. 5

FIG. 6

FIG. 7

41

FIG. 8

FIG. 9

## INTERNATIONAL SEARCH REPORT

| International application No. |
|---|
| **PCT/CN2021/128178** |

**A.   CLASSIFICATION OF SUBJECT MATTER**

H01M 10/0525(2010.01)i

According to International Patent Classification (IPC) or to both national classification and IPC

**B.   FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT; WPI; EPODOC; CNKI: 电极, 端子, 极耳, 三个, 第三, 补锂, 锂源, electrode, terminal, tab, three, li, lithium

**C.   DOCUMENTS CONSIDERED TO BE RELEVANT**

| Category* | Citation of document, with indication, where appropriate, of the relevant passages | Relevant to claim No. |
|---|---|---|
| X | CN 108539124 A (BEIJING WELION NEW ENERGY TECHNOLOGY CO., LTD.) 14 September 2018 (2018-09-14)<br>    description, paragraphs 28-46, and figures 2-3 | 1-15 |
| X | CN 107845829 A (BEIJING WELION NEW ENERGY TECHNOLOGY CO., LTD.) 27 March 2018 (2018-03-27)<br>    description, paragraphs 6-15, and figures 1-2 | 1-15 |
| A | CN 109728365 A (JIANGSU TAFEL NEW ENERGY TECHNOLOGY CO., LTD. et al.) 07 May 2019 (2019-05-07)<br>    entire document | 1-15 |
| A | CN 111081982 A (SONGSHAN LAKE MATERIALS LABORATORY) 28 April 2020 (2020-04-28)<br>    entire document | 1-15 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 July 2022** | **27 July 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2021/128178**

| Patent document cited in search report | | | Publication date (day/month/year) | Patent family member(s) | Publication date (day/month/year) |
|---|---|---|---|---|---|
| CN | 108539124 | A | 14 September 2018 | None | |
| CN | 107845829 | A | 27 March 2018 | None | |
| CN | 109728365 | A | 07 May 2019 | None | |
| CN | 111081982 | A | 28 April 2020 | None | |

Form PCT/ISA/210 (patent family annex) (January 2015)